# EUROPÄISCHE PATENTSCHRIFT

(11) **EP 3 074 285 B1**
(45) Veröffentlichungstag und Bekanntmachung des Hinweises auf die Patenterteilung: **15.08.2018**
(21) Anmeldenummer: 14790099.7
(22) Anmeldetag: 29.10.2014
(51) Int. Cl.: B60T 8/40

(54) **ELEKTROHYDRAULISCHE KRAFTFAHRZEUG-BREMSANLAGE**
ELECTRO-HYDRAULIC MOTOR VEHICLE BRAKE SYSTEM
SYSTÈME DE FREINAGE ÉLECTROHYDRAULIQUE D'UN VÉHICULE AUTOMOBILE

(30) Priorität: 28.11.2013 DE 102013018073
(43) Veröffentlichungstag der Anmeldung: 05.10.2016
(73) Patentinhaber: Lucas Automotive GmbH, 56070 Koblenz (DE)
(72) Erfinder: KNECHTGES, Carsten, 56727 Mayen (DE); KNECHTGES, Josef, 56727 Mayen (DE)
(74) Vertreter: Röthinger, Rainer
(86) Internationale Anmeldenummer: PCT/EP2014/073174
(87) Internationale Veröffentlichungsnummer: WO 2015/078651

(56) Entgegenhaltungen:
- WO-A1-2012/059175
- DE-A1-102011 085 273

## Beschreibung

### Technisches Gebiet

Die vorliegende Offenbarung betrifft eine elektrohydraulische Kraftfahrzeug-Bremsanlage.

### Hintergrund

Moderne Kraftfahrzeug-Bremsanlagen arbeiten nach dem "Brake-by-Wire"-Prinzip. Das bedeutet, dass ein Hydraulikdruck an den Radbremsen fußkraftunabhängig über einen Hydraulikdruckerzeuger aufgebaut wird. Derartige Bremsanlagen umfassen, neben dem Hydraulikdruckerzeuger, in der Regel eine Bremspedalschnittstelle mit einer Sensorik zur Detektion einer Betätigung eines Bremspedals, eine mit der Bremspedalschnittstelle gekoppelte Simulatoreinrichtung zur Simulation eines realistischen Pedalrückwirkverhaltens und eine Vielzahl von Hydraulikventilen.

Brake-by-Wire-Bremsanlagen bringen mehrere Vorteile. Beispielsweise sind sie in hervorragender Weise zum Einbau von Energierückgewinnungssystemen geeignet. Ferner kann durch derartige Bremsanlagen ein radindividueller Bremsdruckaufbau besser gesteuert und Fahrdynamikregelungsprogramme (z. B. ABS-, ASR-, ESP-Programme) besser integriert werden.

Beispiele für die Realisierung von Brake-by-Wire-Bremsanlagen sind aus der WO 2012/062393 A1 und der WO 2012/152352 A1 bekannt. Die dort gelehrten Hydraulikdruckerzeuger umfassen eine Zylinder-Kolben-Einrichtung zur Hydraulikdruckerzeugung und einen auf den Kolben der Zylinder-Kolben-Einrichtung einwirkenden elektromechanischen Aktuator. Der elektromechanische Aktuator ist der Zylinder-Kolben-Einrichtung nachgeordnet und mit dem Kolben der Zylinder-Kolben-Einrichtung direkt gekoppelt. Der Kolben kann so über den Aktuator unmittelbar betätigt werden, wodurch ein Hydraulikdruck an den Radbremsen fußkraftunabhängig aufgebaut werden kann.

Ferner ist die Zylinder-Kolben-Einrichtung über eine Kraftübertragungseinrichtung mit einer der Zylinder-Kolben-Einrichtung und dem elektromechanischen Aktuator nachgeordneten Pedalschnittstelle koppelbar. In einem Notbetrieb der Bremsanlage (z.B. bei Ausfall des elektromechanischen Aktuators oder dessen Ansteuerung) ermöglicht die Kraftübertragungseinrichtung eine mechanische Kopplung der Zylinder-Kolben-Einrichtung mit der Bremspedalschnittstelle, um eine Betätigung des Kolbens der Zylinder-Kolben-Einrichtung mittels der an der Pedalschnittstelle anliegenden Fußkraft zu ermöglichen (Push-Through-Betrieb).
Die serielle Anordnung von Zylinder-Kolben-Einrichtung, elektromechanischen Aktuator und von Pedalschnittstelle führt in manchen Realisierungen zu einer verhältnismäßig langen axialen Ausdehnung der dadurch entstehenden Baugruppe. Entsprechend große Einbauräume müssen in den Kraftfahrzeugen bereitgestellt werden. Hydraulikdruckerzeuger mit langer axialer Ausdehnung können ferner die Crashsicherheit eines Fahrzeuges negativ beeinflussen. Auch erfordert die in der WO 2012/062393 A1 und der WO 2012/152352 A1 beschriebene Hydraulikdruckerzeuger-Architektur den Einbau leistungsfähiger Aktuatoren, welche genügend hohe Kolbenbetätigungskräfte aufbringen können, um die erforderlichen Hydraulikdrücke im Brake-by-Wire-Bremsbetrieb zu erzeugen.
Eine Bremsanlage gemäß dem Oberbegriff des unabhängigen Anspruchs 1 ist aus der DE 10 2011 085 273 A1 bekannt. Nachteilig bei dieser Bremsanlage ist eine schwierige Entlüftung des Simulatorkreises.

### Kurzer Abriss

Aufgabe ist es, eine Kraftfahrzeug-Bremsanlage anzugeben, welche eines oder mehrere der oben genannten Probleme oder andere Nachteile bekannter Bremsanlagen-Architekturen überwindet.
Gemäß der Erfindung wird eine Elektrohydraulische Kraftfahrzeug-Bremsanlage gemäß den Merkmalen des unabhängigen Vorrichtungsanspruchs bereitgestellt mit einer mit wenigstens einer Radbremse der Bremsanlage fluidisch koppelbaren ersten Zylinder-Kolben-Einrichtung zur Hydraulikdruckerzeugung an der wenigstens einen Radbremse, wobei die erste Zylinder-Kolben-Einrichtung wenigstens einen ersten Kolben umfasst, mit einer zweiten Zylinder-Kolben-Einrichtung, die wenigstens einen zweiten Kolben umfasst, und mit einen auf den zweiten Kolben der zweiten Zylinder-Kolben-Einrichtung einwirkenden elektromechanischen Aktuator, wobei die zweite Zylinder-Kolben-Einrichtung ausgangsseitig mit dem wenigstens einen ersten Kolben der ersten Zylinder-Kolben-Einrichtung fluidisch gekoppelt oder koppelbar ist, um einen bei Betätigung des elektromechanischen Aktuators in der zweiten Zylinder-Kolben-Einrichtung erzeugten Hydraulikdruck für eine Betätigung des wenigstens einen ersten Kolbens der ersten Zylinder-Kolben-Einrichtung bereitzustellen.

Die Hydraulikdruckerzeugung in der wenigstens einen Radbremse kann in einer Variante allein durch die erste Zylinder-Kolben-Einrichtung erfolgen. Beispielsweise kann die erste Zylinder-Kolben-Einrichtung als einzige druckerzeugende Einheit für die Radbremsen vorgesehen sein. Diese Einheit kann sowohl in einem Push-Through-Betrieb als auch in einem Brake-by-Wire-Betrieb der elektrohydraulischen Kraftfahrzeug-Bremsanlage einen erforderlichen Hydraulikdruck (Bremsdruck) an den Radbremsen erzeugen.

Der Hydraulikdruck kann durch Betätigung (z.B. Vorbewegung und/oder Rückbewegung) des wenigstens einen ersten Kolbens im ersten Zylinder erzeugt werden. Die Stärke der Verschiebung des wenigstens einen ersten Kolbens (also das Ausmaß der Kolbenbetätigung) kann hierbei ein Maß für die Stärke des erzeugten Hydraulikdrucks an den Radbremsen sein. Im Push-Through-Betrieb erfolgt die Betätigung des wenigstens einen ersten Kolbens fußkraftabhängig. Im Brake-by-Wire-Betrieb der Bremsanlage erfolgt die Betätigung des ersten Kolbens fußkraftunabhängig mit Hilfe des elektromechanischen Aktuators.

Die elektrohydraulische Bremsanlage umfasst ferner eine mit einem Bremspedal koppelbare Pedalschnittstelle mit einer dritten Zylinder-Kolben-Einrichtung, welche mit der ersten Zylinder-Kolben-Einrichtung zur Hydraulikdruckerzeugung wahlweise koppelbar ist. Im Push-Through-Betrieb der Bremsanlage kann die dritte Zylinder-Kolben-Einrichtung mit der ersten Zylinder-Kolben-Einrichtung gekoppelt sein. Hingegen kann im Brake-by-Wire-Betrieb der Bremsanlage die dritte Zylinder-Kolben-Einrichtung von der ersten Zylinder-Kolben-Einrichtung entkoppelt sein. Die Kopplung kann hierbei mechanisch erfolgen. Beispielsweise kann die Bremsanlage eine mechanische Koppeleinrichtung (oder Kraftübertragungseinrichtung) umfassen, welche dazu ausgebildet ist, den ersten Kolben der ersten Zylinder-Kolben-Einrichtung mit dem dritten Kolben der dritten Zylinder-Kolben-Einrichtung mechanisch zu koppeln.

Der dritte Kolben der dritten Zylinder-Kolben-Einrichtung ist mit dem Bremspedal gekoppelt. Auf diese Weise kann in einer Variante eine Bremspedalbetätigung (z.B. ein Niederdrücken oder eine Rückbewegen des Bremspedals) und insbesondere die am Bremspedal aufgebrachte Betätigungskraft direkt auf den ersten Kolben übertragen werden. Somit kann im Push-Through-Betrieb der Bremsanlage ein Hydraulikdruck an den mit der ersten Zylinder-Kolben-Einrichtung fluidisch gekoppelten Radbremsen direkt über die am Bremspedal anliegende Fußkraft aufgebaut werden.

Die zweite Zylinder-Kolben-Einrichtung kann dazu vorgesehen sein, in einem Brake-by-Wire-Betrieb der Bremsanlage einen Hydraulikdruck (Betätigungsdruck) zur hydraulischen Betätigung des ersten Kolbens der ersten Zylinder-Kolben-Einrichtung bereitzustellen. Die Stärke des bereitgestellten Betätigungsdrucks legt den Grad der Betätigung des ersten Kolbens fest (und somit den erzeugten Hydraulikdruck an den Radbremsen). Die Bereitstellung des Betätigungsdrucks kann von einem erfassten Bremswunsch abhängen (z.B. zu diesem proportional sein) oder von den Befehlen eines Fahrdynamikregelungsprogramms. Der Bremswunsch kann durch eine Sensorik am Bremspedal oder in der Pedalschnittstelle erfasst werden und von einer elektronischen Steuereinheit der Bremsanlage in entsprechende Betätigungssignale für den elektromechanischen Aktuator umgewandelt werden. Der Bremswunsch kann beispielsweise durch Erfassen eines Bremspedalweges und/oder einer auf das Bremspedal einwirkenden Betätigungskraft bestimmt werden. Das Fahrdynamikregelungsprogramm, wie beispielsweise ein Antiblockiersystem (ABS), eine Antriebsschlupfregelung (ASR), ein elektronischen Stabilitätsprogramm (ESP), auch als Fahrzeugstabilitätsregelung (Vehicle Stability Control, VSC) bezeichnet, oder ein Abstandsregeltempomat (ACC), kann in der elektronischen Steuereinheit hinterlegt sein. Es kann auf Basis erfasster, auf einen Fahrzustand des Fahrzeugs hinweisender Sensordaten Befehle für den elektromechanischen Aktuator ausgeben.

In Abhängigkeit der Betätigungssignale oder Befehle kann der elektromechanische Aktuator den zweiten Kolben bewegen und so einen hydraulischen Betätigungsdruck für den wenigstens einen ersten Kolben erzeugen. Die Erzeugung des Betätigungsdrucks kann hierbei nicht bloß auf die Erzeugung eines Soll-Druckwertes beschränkt sein, um die Stärke der Betätigung des ersten Kolbens festzulegen. Vielmehr kann über entsprechende Ansteuerung des elektromechanischen Aktuators auch die Zeitdauer und/oder die Geschwindigkeit der Betätigung des zweiten Kolbens festgelegt werden. Somit kann auch die Geschwindigkeit und/oder die Zeitdauer der Betätigung des wenigstens einen ersten Kolbens allein über den bereitgestellten Betätigungsdruck (und somit fußkraftunabhängig) festgelegt werden. Durch entsprechende zeitliche Regelung des in der zweiten Zylinder-Kolben-Einrichtung bereitgestellten Betätigungsdruckes kann die hydraulische Betätigung des ersten Kolbens zeitlich gesteuert werden. Es können so beliebige Hydraulikdruckaufbau-, Hydraulikdruckhalte- und/oder Hydraulikdruckabbau-Phasen realisiert werden.
Der erste Kolben der ersten Zylinder-Kolben-Einrichtung und die zweite Zylinder-Kolben-Einrichtung sind über einen Fluidpfad der Bremsanlage miteinander fluidisch gekoppelt. Der erste Kolben und der zweite Kolben können über den Fluidpfad fluidisch in Serie geschaltet sein. Ein bei Betätigung des zweiten Kolbens aus der zweiten Zylinder-Kolben-Einrichtung verdrängtes Hydraulikfluid kann über den Fluidpfad zum ersten Kolben der ersten Zylinder-Kolben-Einrichtung gelangen, wodurch dieser betätigt wird. Eine mechanische Betätigung des zweiten Kolbens kann somit in eine hydraulische Betätigung des ersten Kolbens umgewandelt werden. Da das im Fluidpfad und in der zweiten Zylinder-Kolben-Einrichtung befindliche Hydraulikfluid nicht komprimierbar ist, wird jede elektromechanische Betätigung des zweiten Kolbens in eine entsprechende hydraulische Betätigung des ersten Kolbens verlustfrei übertragen. Insbesondere kann der am betätigten zweiten Kolben anliegende Betätigungsdruck dem am ersten Kolben anliegenden Betätigungsdruck entsprechen.
Die erste Zylinder-Kolben-Einrichtung und die zweite Zylinder-Kolben-Einrichtung können derart ausgestaltet sein, dass eine Wirkfläche des wenigstens einen ersten Kolbens und eine Wirkfläche des zweiten Kolbens, auf denen jeweils der erzeugte Hydraulikdruck wirkt, in einem vorgegebenen Verhältnis zueinander stehen. Beispielsweise können der erste Kolben und der zweite Kolben dieselbe Wirkfläche aufweisen oder aber der zweite Kolben eine kleinere oder eine größere Wirkfläche als der erste Kolben aufweisen. Über die Abmessungen der Wirkflächen des ersten Kolbens und des zweiten Kolbens kann eine Übersetzung für die auf den ersten Kolben und den zweiten Kolben einwirkenden Betätigungskräfte festgelegt werden. Denn durch die serielle Kopplung des wenigstens einen ersten Kolbens mit dem zweiten Kolben kann auf beide Kolben der in der zweiten Zylinder-Kolben-Einrichtung durch Verschiebung des zweiten Kolbens erzeugte Hydraulikdruck wirken. Die jeweils effektiv am ersten Kolben und am zweiten Kolben anliegende oder aufzubringende Betätigungskraft kann sich dann gerade aus dem Produkt des erzeugten Betätigungsdrucks und der jeweiligen Kolbenfläche ergeben, auf die der Betätigungsdruck wirkt.
Gemäß einer Variante kann die Wirkfläche des zweiten Kolbens (oder der Kolbendurchmesser) gegenüber der Wirkfläche des ersten Kolbens kleiner ausgebildet sein. In diesem Fall kann die bei einem erzeugten Hydraulikdruck am ersten Zylinder anliegende Betätigungskraft um einem aus dem Verhältnis der beiden Wirkflächen des ersten und des zweiten Kolbens berechenbaren Faktor größer sein als die am zweiten Kolben anliegende oder aufzubringende Betätigungskraft. Beispielsweise kann durch die serielle Schaltung eines größeren ersten Kolbens mit einem kleineren zweiten Kolben eine hydraulische Kraftverstärkung erreicht werden. Um einen bestimmten Hydraulikdruck an den Radbremsen aufzubauen, ist am zweiten Kolben lediglich eine Betätigungskraft aufzuwenden, die gerade um den Faktor des Wirkflächenverhältnisses kleiner ist als die am ersten Kolben aufzuwendende Betätigungskraft. Durch die hydraulische Kraftverstärkung kann so das Motormoment sowie die Spindel- und Lagerkräfte des elektromechanischen Aktuators kleiner gehalten werden, um einen im Vergleich zu einem unverstärkten System vorgegebenen Hydraulikdruck zu erzeugen.

Die erste Zylinder-Kolben-Einrichtung weist wenigstens zwei durch den ersten Zylinder und den im ersten Zylinder verschiebbar aufgenommenen wenigstens einen ersten Kolben definierte Hydraulikkammern auf. Eine erste Kammer kann durch eine erste Stirnseite des ersten Kolbens und dem Zylinder definiert sein. Eine zweite Kammer kann durch eine zweite, der ersten Stirnseite gegenüberliegende, Stirnseite des ersten Kolbens und dem Zylinder definiert sein. Die erste Kammer ist mit der zweiten Zylinder-Kolben-Einrichtung fluidisch gekoppelt. Ferner ist die wenigstens eine zweite Hydraulikkammer mit wenigstens einem Bremskreis der Bremsanlage fluidisch koppelbar. Die erste Kammer kann dazu ausgelegt sein, das aus der zweiten Zylinder-Kolben-Einrichtung verdrängte Hydraulikfluid aufzunehmen. Dadurch kann der erste Kolben in Richtung der zweiten Hydraulikkammer verschoben werden, wodurch das in der zweiten Hydraulikkammer aufgenommene Hydraulikfluid in die Bremskreise verschoben werden kann. Auf diese Weise kann im Brake-by-Wire-Betrieb der erste Kolben hydraulisch betätigt werden und über die zweite Kammer ein entsprechender Hydraulikdruck an den Radbremsen aufgebaut werden.
Gemäß einer Ausgestaltung kann die wenigstens eine zweite Kammer zwei Hydraulikkammern umfassen, wobei die zwei Hydraulikkammern jeweils mit einem Bremskreis der Bremsanlage fluidisch gekoppelt oder koppelbar sind. Die zwei Hydraulikkammern können in der ersten Zylinder-Kolben-Einrichtung nacheinander angeordnet sein (Anordnung der Hydraulikkammern nach dem Tandem-Prinzip).
Die dritte Zylinder-Kolben-Einrichtung ist ferner mit der zweiten Zylinder-Kolben-Einrichtung wahlweise fluidisch koppelbar. Die wahlweise fluidische Kopplung kann über einen Fluidpfad und ein darin aufgenommenes betätigbares
Ventil erfolgen. Der Fluidpfad koppelt die dritte Zylinder-Kolben-Einrichtung mit der mit der zweiten Zylinder-Kolben-Einrichtung fluidisch gekoppelten ersten Kammer der ersten Zylinder-Kolben-Einrichtung wahlweise fluidisch. Es ist alternativ hierzu auch denkbar, dass die dritte Zylinder-Kolben-Einrichtung und die erste Zylinder-Kolben-Einrichtung über den Fluidpfad direkt fluidisch koppelbar sind. Im Bremsbetrieb (Push-Through-Betrieb oder Brake-by-Wire-Betrieb) kann die dritte Zylinder-Kolben-Einrichtung von der zweiten Zylinder-Kolben-Einrichtung fluidisch entkoppelt bleiben. Im Rahmen einer automatischen Entlüftung der Pedalschnittstelle oder eines mit der Pedalschnittstelle gekoppelten Simulatorkreis kann die dritte Zylinder-Kolben-Einrichtung von der zweiten Zylinder-Kolben-Einrichtung fluidisch gekoppelt werden. Es kann dann Hydraulikfluid von der zweiten Zylinder-Kolben-Einrichtung in die Pedalschnittstelle gefördert werden, um diese zu entlüften.

Die erste Zylinder-Kolben-Einrichtung und die dritte Zylinder-Kolben-Einrichtung der Bremsanlage können im montierten Zustand räumlich nacheinander (seriell) angeordnet sein und beispielsweise eine separat handhabbare Baugruppe bilden. Die dem Bremspedal zuordenbare dritte Zylinder-Kolben-Einrichtung kann hierbei vom Bremspedal aus betrachtet vor der ersten Zylinder-Kolben-Einrichtung angeordnet sein. Die dritte Zylinder-Kolben-Einrichtung und die erste Zylinder-Kolben-Einrichtung können koaxial zueinander angeordnet sein.

Ferner können die erste Zylinder-Kolben-Einrichtung und die zweite Zylinder-Kolben-Einrichtung räumlich im Wesentlichen parallel zueinander angeordnet sein und beispielsweise eine separat handhabbare Baugruppe bilden. Mit anderen Worten kann die nacheinander angeordnete erste und dritte Zylinder-Kolben-Einrichtung im Wesentlichen parallel zur zweiten Zylinder-Kolben-Einrichtung angeordnet sein. Auf diese Weise kann die axiale Ausdehnung der Hydraulikdruckerzeuger-Komponenten (also erste, zweite und dritte Zylinder-Kolben-Einrichtung) weiter reduziert werden.

Die elektrohydraulische Bremsanlage kann ferner ein Steuergerät oder ein Steuergerätesystem zur elektrischen Ansteuerung des elektromechanischen Aktuators im Brake-by-Wire Betrieb umfassen. Das elektrische Steuergerät oder Steuergerätesystem kann dazu ausgelegt sein, ein auf einen Bremswunsch eines Fahrers und/oder auf einen Fahrzustand des Kraftfahrzeuges hinweisende Messgrößen auszuwerten und entsprechende Ansteuerbefehle für den Aktuator auszugeben. Basierend auf den ausgewerteten Sensorsignalen kann das elektrische Steuergerät oder Steuergerätesystem den elektromechanischen Aktuator entsprechend ansteuern, um einen Betätigungsdruck in der zweiten Zylinder-Kolben-Einrichtung zu erzeugen.

Gemäß einem Beispiel zum Verständnis der Erfindung, wird nachfolgend ein Verfahren zum Betreiben einer elektrohydraulischen Kraftfahrzeug-Bremsanlage bereitgestellt. Die Kraftfahrzeug-Bremsanlage umfasst wenigstens eine erste Zylinder-Kolben-Einrichtung, welche mit wenigstens einer Radbremse der Bremsanlage fluidisch koppelbar ist, zur Hydraulikdruckerzeugung an der wenigstens einen Radbremse, wobei die erste Zylinder-Kolben-Einrichtung wenigstens einen Kolben umfasst, und eine zweite Zylinder-Kolben-Einrichtung mit einem zweiten Kolben und mit einem auf den zweiten Kolben der zweiten Zylinder-Kolben-Einrichtung einwirkenden elektromechanischen Aktuator, wobei die zweite Zylinder-Kolben-Einrichtung ausgangsseitig mit dem wenigstens einen ersten Kolben der ersten Zylinder-Kolben-Einrichtung fluidisch gekoppelt oder koppelbar ist. Das Verfahren umfasst hierbei die Schritte des Detektierens wenigstens eines, auf einen Fahrerbremswunsch oder eine Notwendigkeit eines Fahrdynamikregeleingriffs hinweisenden Parameters, und des Betätigens, mittels des elektromechanischen Aktuators, des zweiten Kolbens der zweiten Zylinder-Kolben-Einrichtung in Abhängigkeit des detektierten Parameters, um einen Hydraulikdruck zur Betätigung des ersten Kolbens der ersten Zylinder-Kolben-Einrichtung bereitzustellen.
Ein auf einen Fahrerbremswunsch hinweisender Parameter kann beispielsweise ein Betätigungsweg eines Bremspedals und/oder eine auf das Bremspedal einwirkende Betätigungskraft sein.
Ein auf eine Notwendigkeit eines Fahrdynamikregeleingriffs hinweisender Parameter kann beispielsweise eine Drehrate des Fahrzeuges um eine Fahrzeugachse (z.B. Gierrate), ein Schlupfwert, ein Beschleunigungswert und/oder ein Geschwindigkeitswert wenigstens eines Rads des Kraftfahrzeuges sein. Ein auf eine Notwendigkeit eines Fahrdynamikregeleingriffs hinweisender Parameter kann aber auch ein Abstandswert zu einem anderen Fahrzeug sein. Ein elektronisches Fahrdynamikregelungsprogramm, kann dann in Abhängigkeit des oder der erfassten Parameter entsprechende Befehle für die Betätigung des elektromechanischen Aktuator ausgeben. Die Betätigung des elektromechanischen Aktuators erfolgt in diesem Fall zur Einstellung eines bestimmten (z.B. stabilen) Fahrzustands. Die Betätigung des elektromechanischen Aktuators kann auch dann erfolgen, wenn kein Fahrerbremswunsch detektiert wurde (z.B. bei der Einstellung eines Abstandes zu einem vorausfahrenden Fahrzeug).

Die Betätigung des elektromechanischen Aktuators kann proportional zum oder anderweitig abhängig vom erfassten Parameterwert sein. Im Rahmen einer regenerativen Bremsanlage und der Möglichkeit, während eines Bremsvorganges einen Generator zur Energierückgewinnung zuzuschalten, hängt die Betätigung des elektromechanischen Aktuators ferner davon ab, ob ein Bremswunsch oder Bremsbefehl durch den Generator umgesetzt werden kann oder soll. Bei einer regenerativen Bremsanlage oder im Rahmen eines regenerativen Bremsbetriebs wird der elektromechanische Aktuator beispielsweise dann betätigt, wenn der Bremswunsch oder Bremsbefehl durch den Generator allein nicht umgesetzt werden kann ("Blending").

Der Schritt des Betätigens kann unter Berücksichtigung eines hydraulischen Übersetzungsverhältnisses zwischen der ersten Zylinder-Kolben-Einrichtung und der zweiten Zylinder-Kolben-Einrichtung erfolgen.

### Kurze Beschreibung der Zeichnungen

Weitere Vorteile, Aspekte und Einzelheiten der hier vorgestellten elektrohydraulischen Kraftfahrzeug-Bremsanlage ergeben sich aus der nachfolgenden Beschreibung exemplarischer Beispiele sowie aus den Figuren. Es zeigen:
- Fig. 1: ein Beispiel einer elektrohydraulischen Kraftfahrzeug-Bremsanlage zum Verständnis der Erfindung; und
- Fig. 2: ein Ausführungsbeispiel einer elektrohydraulischen Kraftfahrzeug-Bremsanlage nach der vorliegenden Erfindung.

### Detaillierte Beschreibung

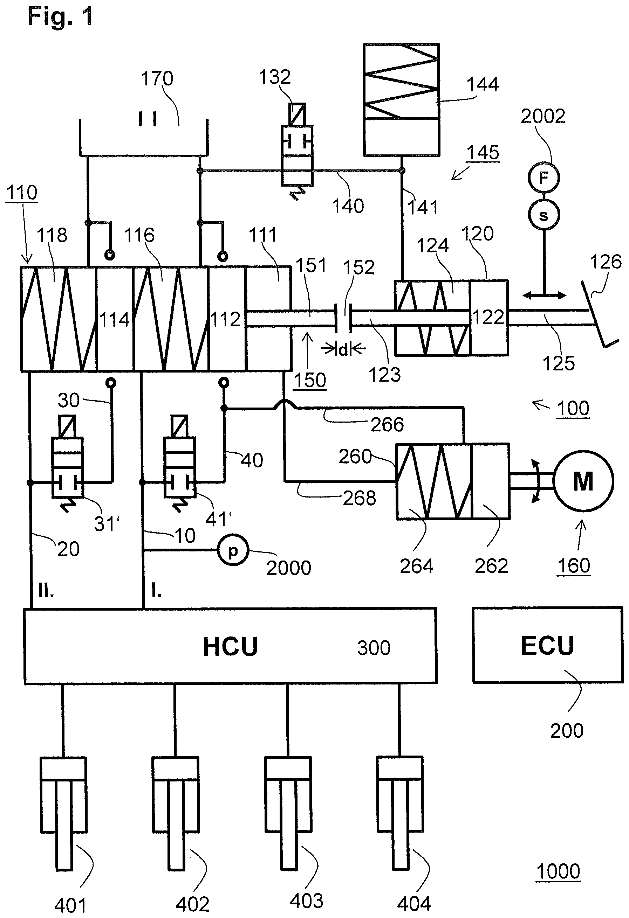

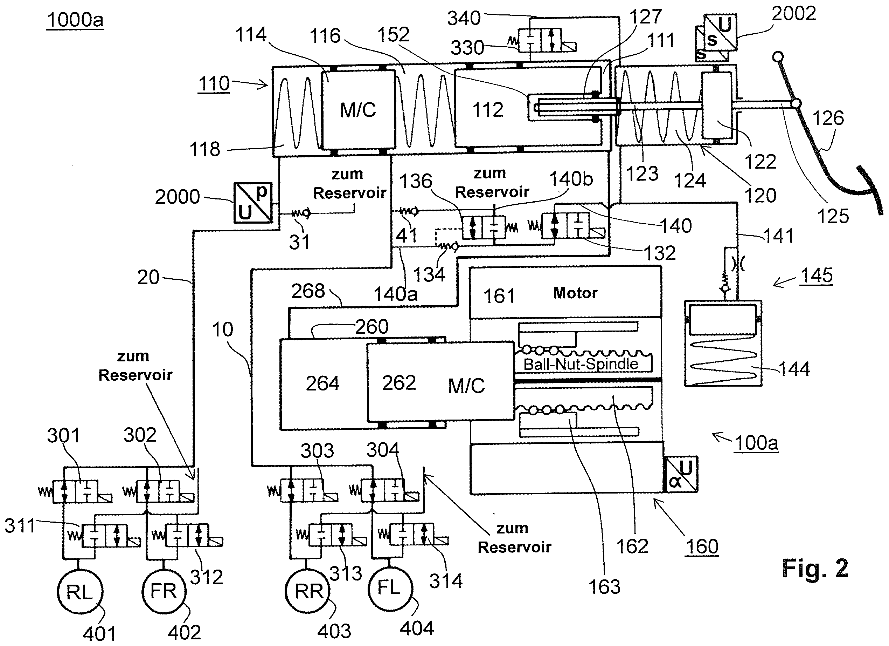

Fig. 1 zeigt ein Beispiel einer elektrohydraulischen Kraftfahrzeug-Bremsanlage 1000 zur Vorbereitung des Verständnisses des in Fig. 2 gezeigten Ausführungsbeispiels. In der in Fig. 1 gezeigten nicht zu der Erfindung gehörenden Bremsanlage handelt es sich um eine zweikreisige Bremsanlage mit einem ersten Bremskreis 10 und einem zweiten Bremskreis 20. Die vorliegende Erfindung hängt nicht von der Anzahl der Bremskreise der Bremsanlage 1000 ab.

Die Bremsanlage 1000 umfasst eine Hydraulikdruckerzeuger-Baugruppe 100, welche mit den beiden Bremskreisen 10, 20 fluidisch gekoppelt ist, einen mit der Baugruppe 100 fluidisch gekoppelten Simulatorkreis 145, ein zentral angeordnetes Hydraulikfluidreservoir 170, und einen das Hydraulikfluidreservoir 170 und den Simulatorkreis 145 fluidisch koppelnden Fluidpfad 140 mit einem darin angeordneten Ventil 132. Die Bremsanlage 1000 umfasst ferner eine Sensorik 2000, 2002 zur quantitativen Erfassung eines Fahrerwunsches (z.B. Erfassung eines Betätigungsweges s und/oder einer Betätigungskraft F am Bremspedal 126) sowie eines in den Bremskreisen 10, 20 anliegenden Hydraulikdruckes, ein elektronisches Steuergerät bzw. eine elektronische Steuereinheit 200 (im Folgenden ECU genannt), eine hydraulische Steuereinheit 300 (im Folgenden HCU genannt) und jeweils mit dem ersten Bremskreis 10 und dem zweiten Bremskreis 20 fluidisch gekoppelte Radbremsen 401-404. Ferner umfasst die Bremsanlage 1000 zwei Rückleitungen 30, 40 mit jeweils darin angeordneten Ventilen 31', 41'. Die Rückleitungen 30, 40 sind jeweils mit einem ersten Ende mit einem entsprechenden Bremskreis 10, 20 fluidisch gekoppelt und mit einem zweiten Ende mit dem drucklosen Hydraulikfluidreservoir 170 fluidisch gekoppelt. Über die Rückleitungen 30, 40 kann ein in den Bremskreisen aufgebauter Hydraulikdruck schnell abgebaut werden (durch Öffnen der Ventile 31', 41', welche im unbetätigten Zustand eine geschlossene Ventilstellung einnehmen).

Optional hierzu kann die Bremsanlage eine Generatoreinheit zur Energierückgewinnung umfassen (nicht dargestellt in Fig. 1). Die Generatoreinheit ist dazu ausgelegt, kinetische Energie im Bremsbetrieb in elektrische Energie zurück zu wandeln. Hierfür ist die Generatoreinheit mit wenigstens einem Rad verbunden, um die Rotationsbewegung in elektrische Energie umzuwandeln. Ferner kann die Generatoreinheit mit einem Energiespeicher (z.B. einer Batterie, in Fig. 1 nicht gezeigt) verbunden sein, welche die gewonnene elektrische Energie speichert.

Die HCU 300 umfasst mehrere elektrisch betätigbare Ventilgruppen zur Hydraulikdruckregelung in den beiden Bremskreisen 10, 20. Abweichend von der in Figur 1 gezeigten separaten Ausbildung von HCU 300, den Ventilen 31, 41 und der ersten Ventileinrichtung 132, können die Ventile 31, 41, 132 ebenso in der HCU 300 integriert sein. Realisierungsbeispiele für die Ventile bzw. Ventilgruppen der HCU 300 werden in Zusammenhang mit der Fig. 2 weiter unten ausführlicher beschrieben.

Die ECU 200 ist wenigstens zur Ansteuerung der elektrisch betätigbaren Ventile der HCU 300 ausgelegt. Sie ist ferner dazu ausgelegt, die Baugruppe 100 anzusteuern. Die Ansteuerung erfolgt hierbei auf Basis der von der Sensorik 2000, 2002 erfassten Sensorsignale. Die ECU 200 wertet die Sensorsignale aus und erzeugt entsprechende Ansteuersignale für die Ventile und/oder die Baugruppe 100. Die ECU 200 umfasst hierfür Steuerfunktionen für die HCU 300 und die Baugruppe 100. Alternativ hierzu ist auch denkbar, dass die Ansteuerfunktionen für die Baugruppe 100 und die HCU 300 jeweils in getrennten elektronischen Steueruntereinheiten organisiert sind und diese Untereinheiten im Bremsbetrieb entsprechend zusammenwirken.

Im Folgenden wird nun anhand der in Fig. 1 gezeigten Bremsanlage 1000 der Aufbau und die Funktionsweise der Hydraulikdruckerzeuger-Baugruppe 100 näher erläutert.

Die Hydraulikdruckerzeuger-Baugruppe 100 umfasst eine erste Zylinder-Kolben-Einrichtung 110, 112, 114, eine zweite Zylinder-Kolben-Einrichtung 260, 262 mit einem auf die zweite Zylinder-Kolben-Einrichtung 260, 262 einwirkenden elektromechanischen Aktuator 160 sowie eine Pedalschnittstelle mit einer dritten Zylinder-Kolben-Einrichtung 120, 122. Ferner umfasst die Baugruppe 100 einen Fluidpfad 268 zur fluidischen Kopplung der zweiten Zylinder-Kolben-Einrichtung 260, 262 mit der ersten Zylinder-Kolben-Einrichtung 110, 112, 114 sowie eine Kraftübertragungseinrichtung 150 zur wahlweisen Kopplung der dritten Zylinder-Kolben-Einrichtung 120, 122 mit der ersten Zylinder-Kolben-Einrichtung 110, 112, 114. Gemäß einer Variante kann das drucklose Hydraulikfluidreservoir 170 zum Speichern von Hydraulikfluid in die Baugruppe 100 integriert sein.

Wie im Folgenden noch ausführlicher diskutiert wird, ist die vorliegenden Baugruppe 100 dazu ausgebildet, einen an den Radbremsen 401-404 erforderlichen Hydraulikdruck allein durch Betätigung des ersten Kolbens 112, 114 der ersten Zylinder-Kolben-Einrichtung 110, 112 aufzubauen. Die Betätigung des ersten Kolbens 112, 114 erfolgt in einem Push-Through-Betrieb der Bremsanlage 1000 fußkraftabhängig durch Kopplung der ersten Zylinder-Kolben-Einrichtung 110, 112, 114 mit der dritten Zylinder-Kolben-Einrichtung 120 und in einem Normalbetrieb (oder Brake-by-Wire-Betrieb) der Bremsanlage 1000 fußkraftunabhängig durch hydraulische Kopplung der ersten Zylinder-Kolben-Einrichtung 110, 112, 114 mit der zweite Zylinder-Kolben-Einrichtung 260, 262. Die Bremsanlage 1000 bzw. die Baugruppe 100 befindet sich üblicherweise im Normalbetrieb und geht nur dann in einen Push-Through-Betrieb über, wenn die Kolben 112, 114 der ersten Zylinder-Kolben-Einrichtung 110, 112, 144 nicht über die zweite Zylinder-Kolben-Einrichtung 260, 262 hydraulisch betätigbar sind. Dies kann beispielsweise dann der Fall sein, wenn der elektromechanische Aktuator 160 oder dessen elektronische Ansteuerung nicht ordnungsgemäß arbeitet oder ausfällt (z.B. bei einem Bordnetzausfall).

Es wird zunächst die erste Zylinder-Kolben-Einrichtung 110, 112, 114 und die mit der ersten Zylinder-Kolben-Einrichtung 110, 112, 114 fluidisch gekoppelte zweite Zylinder-Kolben-Einrichtung 260, 262 beschrieben.

Die erste Zylinder-Kolben-Einrichtung 110, 112, 114 umfasst einen in einem ersten Zylinder 110 verschiebbar aufgenommenen ersten Kolben 112 (im folgenden Primärkolben genannt) und einen im ersten Zylinder 110 verschiebbar aufgenommenen zweiten Kolben 114 (im folgenden Sekundärkolben oder Schwimmkolben genannt). Beide Kolben 112, 114 können jeweils mit einer Federeinrichtung gekoppelt sein, welche dazu ausgelegt sind, die beiden Kolben 112, 114 im unbetätigten Zustand in ihre Ausgangsposition zurückzustellen.

Primärkolben 112 und Sekundärkolben 114 sind im ersten Zylinder 110 nacheinander angeordnet (Tandem-Prinzip) und definieren drei Hydraulikkammern 111, 116, 118. Eine erste Hydraulikkammer 111 wird durch eine in Betätigungsrichtung zur Hydraulikdruckerzeugung abgewandten Stirnseite des Primärkolbens 112 (rechte Stirnseite in Fig. 1, im Folgenden Rückseite genannt) und einem der Rückseite des Primärkolbens 112 zugewandten ersten Zylinderboden definiert. Eine zweite Hydraulikkammer 116 wird durch eine in Betätigungsrichtung zur Hydraulikdruckerzeugung zeigende Stirnseite des Primärkolbens 112 (linke Stirnseite des Primärkolbens in Fig. 1) und durch eine der Betätigungsrichtung zur Hydraulikdruckerzeugung abgewandten Stirnseite des Sekundärkolbens 114 definiert. Ferner wird durch eine in Betätigungsrichtung zur Hydraulikdruckerzeugung zeigende Stirnseite des Sekundärkolbens 114 (linke Stirnseite des Sekundärkolbens 114 in Fig. 1) und einen zweiten Zylinderboden eine zweite Hydraulikkammer 118 definiert. Somit sind die erste Hydraulikkammer 111 und die zweite Hydraulikkammer 116 über den verschiebbar aufgenommenen Primärkolben 112 voneinander getrennt. Genauso sind die zweite Hydraulikkammern 116 und die dritte Hydraulikkammer 118 über den verschiebbar aufgenommenen Sekundärkolben 114 voneinander getrennt.

Die zweite Hydraulikkammer 116 ist mit dem ersten Bremskreis 10 und die dritte Hydraulikkammer 118 mit dem zweiten Bremskreis 20 fluidisch gekoppelt. Ferner stehen die zweite Hydraulikkammer 116 und die dritte Hydraulikkammer 118 in bekannter Weise mit dem drucklosen Hydraulikfluidreservoir 170 fluidisch in Verbindung. Auf diese Weise wird sichergestellt, dass die zweite Hydraulikkammer 116 und die dritte Hydraulikkammer 118 jederzeit mit genügend Hydraulikfluid versorgt sind, so dass bei einer Betätigung des Primärkolbens 112 und des Sekundärkolbens 114 Hydraulikfluid aus den beiden Kammern 116, 118 in die jeweiligen Bremskreise 10, 20 gefördert werden kann, um einen Hydraulikdruck an den Radbremsen 401-404 aufzubauen.

Die erste Hydraulikkammer 111 ist über einen Fluidpfad 268 mit der zweiten Zylinder-Kolben-Einrichtung 260, 262 fluidisch gekoppelt. Sie ist jedoch nicht mit einem der Bremskreise 10, 20 fluidisch gekoppelt. Die erste Hydraulikkammer 111 dient dazu, im Brake-by-Wire-Bremsbetrieb ein aus der zweiten Zylinder-Kolben-Einrichtung 260, 262 gefördertes Hydraulikfluidvolumen im Rahmen einer Druckaufbauphase oder Druckhaltephase aufzunehmen bzw. aufgenommenes Hydraulikfluid im Rahmen einer Druckabbauphase wieder an die zweite Zylinder-Kolben-Einrichtung 260, 262 abzugeben.

Die zweite Zylinder-Kolben-Einrichtung 260, 262 umfasst einen in einem zweiten Zylinder 260 verschiebbar aufgenommenen zweiten Kolben 262. Der zweite Kolben 262 ist mit seiner dem elektromechanischen Aktuator 160 zugewandten Stirnseite (rechte Seite in Fig. 1) mit dem elektromechanischen Aktuator 160 gekoppelt. Der zweite Kolben 262 definiert ferner mit seiner dem elektromechanischen Aktuator 160 abgewandten Stirnseite zusammen mit dem Zylinder 260 eine Hydraulikkammer 264. Die Hydraulikkammer 264 ist über einen Fluidpfad 266 mit dem zentral angeordneten Hydraulikfluidreservoir 170 fluidisch gekoppelt. Dadurch wird sichergestellt, dass die Hydraulikkammer 264 jederzeit mit genügend Hydraulikfluid versorgt ist. Die Hydraulikkammer 264 steht ferner über den Fluidpfad 268 mit der ersten Hydraulikkammer 111 der ersten Zylinder-Kolben-Einrichtung in direktem fluidischen Kontakt. Die zweite Zylinder-Kolben-Einrichtung 260, 262 hat keine direkte fluidische Verbindung zu einem der beiden Bremskreise 10, 20 der Bremsanlage. Es kann somit kein Hydraulikfluid aus der zweiten Zylinder-Kolben-Einrichtung direkt an die Radbremsen 401-404 gefördert werden. Vielmehr ist die zweite Zylinder-Kolben-Einrichtung dazu ausgelegt, im Bremsbetrieb den Primärkolben 112 (und den damit gekoppelten Sekundärkolben 114) hydraulisch zu betätigen.

Der zweite Kolben 262 wird über den elektromechanischen Aktuator 160 betätigt. Konkret ist der elektromechanische Aktuator 160 dazu vorgesehen, in Abhängigkeit von der ECU 200 empfangener Ansteuersignale den zweiten Kolben 262 im zweiten Zylinder 260 vor oder zurück zu bewegen. Bei einem Vorschub des Kolbens (Kolben 262 bewegt sich nach links in Fig. 1) wird dabei die vom Aktuator 160 aufgebrachte Betätigungskraft auf das Hydraulikfluid in der Hydraulikkammer 264 übertragen. Dadurch wird in der Hydraulikkammer 264 ein Hydraulikdruck erzeugt, welcher gerade dem Verhältnis aus der vom Aktuator 160 aufgebrachten Betätigungskraft und der effektiven Fläche des zweiten Kolbens 262 entspricht, auf welcher die Betätigungskraft einwirkt (Wirkfläche des zweiten Kolbens 262). Da die Hydraulikkammer 264 über den Fluidpfad 268 mit der ersten Kammer 111 der ersten Zylinder-Kolben-Einrichtung 110, 112, 114 fluidisch gekoppelt ist, wird der in der Hydraulikkammer 264 aufgebaute Hydraulikdruck auf die erste Kammer 111 übertragen. An der Rückseite des Primärkolbens 112 liegt somit der in der zweiten Zylinder-Kolben-Einrichtung 260, 262 erzeugte Hydraulikdruck als Betätigungsdruck für den Primärkolben 112 an. Der aufgebaute Betätigungsdruck führt zur Verschiebung des Primärkolbens 112 und des damit gekoppelten Sekundärkolbens 114. Durch die Verschiebung des Primärkolbens 112 in Richtung der zweiten Hydraulikkammer 116 nimmt das Volumen der ersten Hydraulikkammer 111 zu, während das Volumen der zweiten Hydraulikkammer 116 und der dritten Hydraulikkammer 118 der ersten Zylinder-Kolben-Einrichtung 110, 112, 114 abnimmt. Das zunehmende Volumen der ersten Hydraulikkammer 111 wird aufgrund der Betätigung des zweiten Kolbens 262 kontinuierlich mit aus der Hydraulikkammer 264 der zweiten Zylinder-Kolben-Anordnung 260, 262 verdrängtem Hydraulikfluid gespeist, so dass der Betätigungsdruck an der Rückseite des Primärkolbens 112 stets aufrecht erhalten bleibt.

Die Verschiebung des Primärkolbens 112 hat zur Folge, dass der Hydraulikdruck in der zweiten und dritten Kammer 112, 114 (und in den damit gekoppelten Bremskreisen 10, 20 und Radbremsen 401-404) stetig zunimmt. Die Verschiebung des Primärkolbens 112 hält so lange an, bis sich in den mit den Radbremsen 401-404 fluidisch gekoppelten Hydraulikkammern 116, 118 ein Hydraulikdruck eingestellt hat, welcher dem Betätigungsdruck in der ersten Hydraulikkammer 111 bzw. in der Hydraulikkammer 264 der zweiten Zylinder-Kolben-Einrichtung 260, 262 entspricht. Somit entspricht der durch hydraulische Betätigung des Primärkolbens erzeugte Hydraulikdruck an den Radbremsen 401-404 dem erzeugten Betätigungsdruck in der zweiten Zylinder-Kolben-Einrichtung 260, 262.

Umgekehrt nimmt bei einer Rückbewegung (Rückhub) des zweiten Kolbens 262 der Betätigungsdruck in der Hydraulikkammer 264 ab, so dass Hydraulikfluid aus der ersten Hydraulikkammer 111 der ersten Zylinder-Kolben-Einrichtung 110, 112, 114 über den Fluidpfad 268 wieder in die Hydraulikkammer 264 der zweiten Zylinder-Kolben-Einrichtung 260, 264 zurückströmen kann. In diesem Fall kann der Primärkolben 112 aufgrund eines in den Bremskreisen 10, 20 noch anliegenden Hydraulikdrucks (Restdruck) oder aufgrund der Federkraft der Federeinrichtungen wieder zurückverschoben werden (z.B. in seine Ausgangsstellung).

Da die Hydraulikkammern 111, 264 und der die beiden Hydraulikkammern 111, 264 verbindende Fluidpfad 268 jederzeit vollständig mit Hydraulikfluid gefüllt sind und Hydraulikfluid nicht komprimierbar ist, wird der in der Kammer 264 aufgebaute Betätigungsdruck ohne Druckabnahme und ohne zeitliche Verzögerung (Retardierung) vollständig auf den Primärkolben 112 übertragen. Mit anderen Worten wird jeder Betätigungsdruck in der Hydraulikkammer 264 verlustfrei auf den Primärkolben 112 übertragen, so dass dieser entsprechend betätigt wird. Wird beispielsweise ein Betätigungsdruck durch Vorschieben des Kolbens 262 aufgebaut, so wird aufgrund des einwirkenden Betätigungsdrucks eine entsprechende Verschiebung des Primärkolbens 112 erfolgen und ein entsprechender Hydraulikdruck an den Radbremsen 401-404 aufgebaut. Wird beispielsweise ein aufgebauter Betätigungsdruck durch Rückbewegung des Kolbens 262 abgebaut, so wird der Primärkolben 112 entsprechend zurückbewegt und der Hydraulikdruck an den Radbremsen 401-404 entsprechend abgebaut oder vermindert. Die Stärke der Betätigung des Primärkolbens 112 hängt vom durch den elektromechanischen Aktuator 160 und dem zweiten Kolben 262 erzeugten Betätigungsdruck ab. Durch die vorliegende serielle hydraulische Kopplung der ersten Zylinder-Kolben-Einrichtung 110, 112, 114 mit der zweiten Zylinder-Kolben-Einrichtung 260, 262 kann ein Hydraulikdruck an den Radbremsen 401- 404 verlustfrei und genauso schnell erzeugt bzw. eingestellt werden, wie wenn der elektromechanische Aktuator 160 unmittelbar mit dem ersten Primärkolben 112 gekoppelt wäre und eine Betätigung des Primärkolbens 112 direkt durch den elektromechanischen Aktuator 160 erfolgen würde.

Die Kopplung des elektromechanischen Aktuators 160 mit einer mit der ersten Zylinder-Kolben-Einrichtung 110, 112, 114 fluidisch gekoppelten zweiten Zylinder-Kolben-Einrichtung 260, 262 anstatt einer direkten Kopplung des elektromechanischen Aktuators 160 mit der ersten Zylinder-Kolben-Einrichtung 110, 112, 114 ermöglicht ferner eine Übersetzung der am Primärkolben 112 bereitzustellenden Betätigungskraft. Denn zu jedem gewünschten Hydraulikdruck an den Radbremsen (Bremsdruck), muss am Primärkolben 112 bzw. am Sekundärkolben 114 eine bestimmte Betätigungskraft aufgebracht werden, welche dem Produkt aus dem zu erzeugenden Hydraulikdruck und einer effektiven Kolbenfläche des Primärkolbens 112 entspricht, auf welcher der Hydraulikdruck wirkt (Wirkfläche). Je größer hierbei die Wirkfläche des Primärkolbens 112 ist, desto größer ist die aufzubringende Betätigungskraft.

Gemäß einer bevorzugten Ausgestaltung (in Fig. 1 nicht dargestellt) wird die Wirkfläche des zweiten Kolbens 262 kleiner als die Wirkfläche des Primärkolbens 112 gewählt. Auf diese Weise kann die zur Erzeugung eines vorgegebenen Hydraulikdrucks aufzuwendende Betätigungskraft an der zweiten Zylinder-Kolben-Einrichtung 260, 262 entsprechend dem Verhältnis der beiden Wirkflächen des ersten und des zweiten Kolbens verkleinert werden. Um den vorgegebenen Hydraulikdruck in der ersten Zylinder-Kolben-Einrichtung 110, 112, 114 dennoch zu erreichen, muss der zweite Kolben 262 lediglich einen längerer Betätigungsweg zurücklegen. Die Zunahme des Betätigungswegs steht hierbei im umgekehrten Verhältnis der Wirkflächen des Primärkolbens 112 und des zweiten Kolbens 262.

Durch die kleinere Wirkfläche des zweiten Kolbens 262 kann eine hydraulische Kraftverstärkung erreicht werden, wobei die vom elektromechanischen Aktuator 160 aufgewandte Betätigungskraft um das durch die beiden Wirkflächen vorgegebene Verhältnis am Primärkolben 112 verstärkt wird. Entsprechend kann zum Erreichen eines vorgegebenen Hydraulikdrucks eine um das Verhältnis der beiden Wirkflächen geringere Betätigungskraft am zweiten Kolben 262 als am Primärkolben 112 aufgebracht werden. Durch die hydraulische Verstärkung kann so das Motormoment sowie die Spindel- und Lagerkräfte des elektromechanischen Aktuators kleiner gehalten werden, um einen im Vergleich zu einem unverstärkten System vorgegebenen Hydraulikdruck zu erzeugen.

Im Folgenden wird nun die Pedalschnittstelle und die dritte Zylinder-Kolben-Einrichtung 120 sowie die fußkraftabhängige Betätigung der Kolben 112, 114 der ersten Zylinder-Kolben-Einrichtung 110, 112, 114 mit Hilfe der Pedalschnittstelle näher beschrieben.

Die Pedalschnittstelle umfasst einen dritten Hydraulikzylinder 120 mit einem darin verschiebbar aufgenommenen dritten Kolben 122. Zylinder 120 und Kolben 122 definieren wiederum eine Hydraulikkammer 124, welche mit dem Simulatorkreis 145 der Bremsanlage 1000 fluidisch gekoppelt ist. Ferner ist die Hydraulikkammer 124 über einen Fluidpfad 140 und einem darin aufgenommenen elektrisch betätigbaren Ventil 132 wahlweise mit dem zentralen Hydraulikfluidreservoir 170 fluidisch gekoppelt. Die wahlweise Kopplung zum Hydraulikfluidreservoir 170 garantiert, dass die Hydraulikkammer 124 und/oder der Simulatorkreis 145 jederzeit mit genügend Hydraulikfluid versorgt sind.

Der dritte Kolben 122 ist ferner mit einem ersten Stößel 125 und mit einem zweiten Stößel 123 versehen. Der erste Stößel 125 ist mit einem ersten Ende an einer einem Bremspedal 126 zugewandten Stirnseite des dritten Kolbens 122 befestigt. Ein zweites Ende des zweiten Stößels 125 ist mit dem Bremspedal 126 mechanisch gekoppelt. Auf diese Weise kann eine Pedalbetätigung (d.h. ein Niederdrücken des Bremspedals 126) auf den dritten Kolben 122 übertragen werden, welcher dann in Fahrtrichtung (in Fig. 1 nach links) verschoben wird. Der zweite Stößel 123 ist an einer der Fahrtrichtung zugewandten Stirnseite des dritten Kolbens 122 befestigt. Der zweite Stößel 123 ist dazu vorgesehen, eine Kolbenbewegung auf die Kraftübertragungseinrichtung 150 zu übertragen. Beide Stößel können koaxial zum Kolben 122 angeordnet sein.

Die Kraftübertragungseinrichtung 150 ist dazu ausgebildet, eine am Bremspedal aufgebrachte Betätigungskraft auf die erste Zylinder-Kolben-Einrichtung 110, 112, 114 zu übertragen. Die Kraftübertragungseinrichtung 150 kann als Kolbenstange 151 ausgebildet sein, welche im montierten Zustand der Baugruppe 100 zwischen der ersten Zylinder-Kolben-Anordnung 110, 112, 114 und der dritten Zylinder-Kolben-Anordnung 120, 122 angeordnet ist. Konkret kann die Kolbenstange 151 an einem Ende mit der Rückseite des Primärkolbens 112 der ersten Zylinder-Kolben-Anordnung 110, 112, 114 gekoppelt sein. Die Kolbenstange 151 kann hierbei koaxial zum Primärkolben 112 angeordnet sein und sich in Richtung der dritten Zylinder-Kolben-Einrichtung 120, 122 erstrecken. Die Kolbenstange 151 kann mit ihrem zweiten Ende mit dem zweiten Stößel 123 in Anlage gebracht werden.

Wie in Fig. 1 weiter dargestellt, ist das zweite Ende der Kolbenstange 151 nicht direkt mit dem zweiten Stößel 123 gekoppelt sondern durch eine Lücke (bzw. Spalt d) 152 vom zweiten Stößel 123 räumlich getrennt. Diese Lücke 152 existiert, solange das Bremspedal 126 nicht betätigt wurde. Sie existiert auch bei Betätigung des Bremspedals 126 im Normalbremsbetrieb, da in diesem Fall der Primärkolben 112 und die damit gekoppelte Kolbenstange 151 mit Hilfe des in der zweiten Zylinder-Kolben-Einrichtung 260, 262 erzeugten Betätigungsdrucks hydraulisch betätigt werden. In diesem Fall werden der Primärkolben 112 und die damit gekoppelte Kolbenstange 151 genügend vorgeschoben (Verschiebung nach links in Fig. 1), so dass selbst bei Niederdrücken des Bremspedals 126 und damit einhergehend bei einer Verschiebung des Kolbens 122 und des zweiten Stößels 123 in Richtung der Kolbenstange 151 die Lücke 152 aufrechterhalten bleibt. Somit kommt der erste Stößel 123 während eines Normalbetriebs der Aktuator-Baugruppe 100 nicht in Anlage mit der Kolbenstange 151, und die auf das Bremspedal 126 einwirkende Betätigungskraft kann nicht auf die Kolbenstange 151 übertragen werden.

Im Notbetrieb der Aktuator-Baugruppe 100 bleibt der Aktuator 160 unbetätigt. Somit wird auch die Kolbenstange 151 nicht hydraulisch vorgeschoben. Bei Niederdrücken des Bremspedals 126 kann die (kleine) Lücke 152 zwischen dem zweiten Stößel 123 und dem zweiten Ende der Kolbenstange 151 schnell überwunden werden. Der zweite Stößel 123 gelangt in Anlage mit der Kolbenstange 151. Die Kolbenstange 151 überträgt dann die beim Niederdrücken des Bremspedals 126 verursachte Verschiebung des Kolbens 122 in Richtung der Kolbenstange 151 direkt auf den Primärkolben 112 des Hauptbremszylinders 110 (Push-Through-Prinzip). Der Primärkolben 112 überträgt die Verschiebung wiederum auf den Sekundärkolben 114. Durch die Betätigung von Primärkolben 112 und Sekundärkolben 114 kann dann ein Hydraulikdruck an den Radbremsen 401-404 aufgebaut werden. Somit ermöglicht die hier beschriebene mechanische Kraftübertragungseinrichtung 150 eine direkte mechanische Kopplung des Primärkolbens 112 mit dem dritten Kolben 122 der Pedalschnittstelle bzw. dem Bremspedal 126 zum Hydraulikdruckaufbau während des Notbetriebs (d.h. wenn kein Hydraulikdruck über den Aktuator 160 aufbaubar ist).

Da die Kolbenstange 150 und der zweite Stößel 123 im Wesentlichen koaxial zum Primärkolben 112 bzw. zum Kolben 122 angeordnet sind, erfordert das mechanische Zusammenwirken von Kolbenstange 151 und zweiten Stößel 123 eine im Wesentlichen zueinander koaxiale Ausrichtung von erster Zylinder-Kolben-Einrichtung 110, 112, 114 und dritter Zylinder-Kolben-Einrichtung 120, 122. Mit anderen Worten, sind die erste Zylinder-Kolben-Einrichtung 110, 112, 114 und die dritte Zylinder-Kolben-Einrichtung 120, 122 räumlich hintereinander und im Wesentlichen koaxial zueinander angeordnet.

Anders verhält es sich mit der zweiten Zylinder-Kolben-Einrichtung 260, 262. Diese ist zwar hydraulisch in Serie mit der ersten Zylinder-Kolben-Einrichtung 110, 112, 114 geschaltet, kann aber je nach Ausgestaltung des die erste Zylinder-Kolben-Einrichtung 110, 112 und die zweite Zylinder-Kolben-Einrichtung 260, 262 fluidisch verbindenden Fluidpfads 268 beliebig angeordnet sein. Insbesondere kann, wie in Fig. 1 angedeutet, die zweite Zylinder-Kolben-Einrichtung 260, 262 und der damit gekoppelte elektromechanische Aktuator 160 räumlich parallel zur ersten Zylinder-Kolben-Einrichtung 110, 112, 114 und zur dritten Zylinder-Kolben-Einrichtung 120, 122 angeordnet sein. Auf diese Weise kann die axiale Baulänge der Baugruppe 100 im Vergleich zu den eingangs erwähnten Architekturen weiter reduziert werden.

Im Folgenden wird nun kurz der Simulatorkreis 145 beschrieben. Der Simulatorkreis 145 ist mit der dritten Zylinder-Kolben-Einrichtung 120, 122 fluidisch gekoppelt. Er ist ferner über den Fluidpfad 140 und dem darin angeordneten elektrisch betätigbaren Ventil 132 wahlweise mit dem Hydraulikfluidreservoir 170 fluidisch koppelbar. Der Simulatorkreis 145 umfasst einen Hydraulikdruckspeicher 144, welcher über einen Fluidpfad 141 (und einem darin angeordneten Drosselventil oder Drosselrückschlagventil) mit der Kammer 124 fluidisch gekoppelt ist. Der Hydraulikdruckspeicher 144 ist als Kolben-Zylinder-Anordnung realisiert, wobei der im Zylinder verschiebbar aufgenommene Kolben durch eine Feder vorgespannt ist. Bei Betätigung des Bremspedals 126 im Normalbetrieb (der dritte Kolben 122 ist mit dem Primärkolben 112 nicht gekoppelt, so dass keine Gegenkraft auf das Bremspedal 126 zurückwirkt) wird das aus der Kammer 124 geförderte Hydraulikfluid über den Fluidpfad 141 in den Hydraulikdruckspeicher 144 geleitet. Das in den Hydraulikdruckspeicher 144 strömende Fluid verschiebt dabei den durch die Feder vorgespannten Kolben. Die für die Verschiebung des Kolbens aufzubringende Kraft wirkt als Pedalrückstellkraft auf das Bremspedal 126 zurück. Mit anderen Worten generiert der Hydraulikdruckspeicher 144 einen Gegendruck, welcher auf den dritten Kolben 122 und auf das Bremspedal 126 zurückwirkt. Auf diese Weise wird im Brake-by-Wire-Betrieb eine auf das Bremspedal 126 einwirkende Gegenkraft erzeugt, welche nicht vom Druckaufbau in der ersten Zylinder-Kolben-Einrichtung 110, 112, 114 herrührt, da die dritte Zylinder-Kolben-Einrichtung 120, 122 von der ersten Zylinder-Kolben-Einrichtung 110, 112, 114 entkoppelt ist.

Im Push-Through-Betrieb ist der dritten Kolben 122 mit dem Primärkolben 112 gekoppelt. Das Pedalrückwirkverhalten wird durch den vom Primärkolben erzeugten Hydraulikdruck bestimmt. Ein Rückwirkverhalten braucht in diesem Fall nicht simuliert werden. Das aus der Kammer 124 verdrängte Hydraulikfluid kann über das geöffnete Ventil 132 drucklos in das Hydraulikfluidreservoir 170 abgeleitet werden.

In Fig. 2 wird ein Ausführungsbeispiel einer erfindungsgemäßen elektrohydraulischen Fahrzeugbremsanlage 1000a gezeigt. Komponenten der Bremsanlage 1000a, die mit jenen der in Fig. 1 gezeigten Bremsanlage 1000 baugleich oder in ihrer Funktion ähnlich sind, werden mit denselben Bezugszeichen bezeichnet.

Die Bremsanlage 1000a umfasst eine Hydraulikdruckerzeuger-Baugruppe 100, zwei mit der Hydraulikdruckerzeuger-Baugruppe 100 fluidisch gekoppelte Bremskreise 10, 20, an deren Ende jeweils Radbremsen 401-404 fluidisch gekoppelt sind, zwei den beiden Bremskreisen 10, 20 zuordenbare Rückleitungen 30, 40, ein zentrales Hydraulikfluidreservoir (nicht dargestellt), einen Simulatorkreis 145, einen den Simulatorkreis 145 und das Hydraulikfluidreservoir fluidisch koppelnden Fluidpfad 140 mit darin angeordneten Ventilen 132, 134, 136 sowie einen weiteren, den Simulatorkreis 145 und die Baugruppe 100 fluidisch koppelnden Fluidpfad 340 mit einem darin angeordneten Ventil 330. Ferner umfasst die Bremsanlage 1000a eine elektronische Steuereinheit, oder kurz ECU (in Fig. 2 nicht dargestellt), zur Ansteuerung der Baugruppe 100 und von Ventilen der Bremsanlage 1000a sowie eine Vielzahl elektrisch betätigbarer Ventile 301-304, welche in den Bremskreisen 10, 20 bzw. in den Rückleitungen 30, 40 angeordnet sind und nachstehend noch ausführlicher beschrieben werden.

Dem Hydraulikfluidreservoir 170 und dem Simulatorkreis 145 kommen die in Zusammenhang mit der Bremsanlage 1000 in Fig. 1 beschriebenen Funktionen zu. Es sei in diesem Zusammenhang auf die entsprechende Beschreibung der Fig. 1 verwiesen.

Zunächst wird die Baugruppe 100 näher beschrieben. Die Baugruppe 100 umfasst eine erste Zylinder-Kolben-Einrichtung 110, 112, 114 zur Hydraulikdruckerzeugung an den Radbremsen 401-404, eine zweite Zylinder-Kolben-Einrichtung 260, 262 mit einem auf die zweite Zylinder-Kolben-Einrichtung 260, 262 einwirkenden elektromechanischen Aktuator 160 zur Erzeugung eines Betätigungsdruckes für die erste Zylinder-Kolben-Einrichtung 110, 112, 114, einen die zweite Zylinder-Kolben-Einrichtung 260, 262 mit der ersten Zylinder-Kolben-Einrichtung 110, 112, 114 fluidisch koppelnden Fluidpfad 268 zur Übertragung des Betätigungsdruckes auf die erste Zylinder-Kolben-Einrichtung 110, 112, 114 sowie eine Pedalschnittstelle mit einer dritten Zylinder-Kolben-Einrichtung 120, 122 und einer Übertragungseinrichtung 123 zur direkten Übertragung einer am Bremspedal 126 anliegenden Fußkraft auf die erste Zylinder-Kolben-Einrichtung 110, 112, 114.

Die Baugruppe 100a unterscheidet sich von der in Fig. 1 dargestellten Baugruppe 100 lediglich in der konkreten Ausgestaltung des Primärkolbens 112 der ersten Zylinder-Kolben-Einrichtung 110, der Übertragungseinrichtung 123 zur Übertragung einer Fußkraft im Push-Through-Bremsbetrieb und in der konkreten Ausgestaltung des elektromechanischen Aktuators 160.

Es wird zunächst die erste Zylinder-Kolben-Einrichtung 110, 112, 114 und die mit der ersten Zylinder-Kolben-Einrichtung 110, 112, 114 mechanisch koppelbare dritte Zylinder-Kolben-Einrichtung 120, 122 beschrieben.

Aufbau und Funktion der ersten Zylinder-Kolben-Einrichtung 110, 112, 114 und der dritten Zylinder-Kolben-Einrichtung 120, 122 entsprechen im Wesentlichen dem Aufbau und der Funktion der in Fig. 1 gezeigten ersten Zylinder-Kolben-Einrichtung 110, 112, 114 und der dritten Zylinder-Kolben-Einrichtung 120, 122. Die erste Zylinder-Kolben-Einrichtung 110, 112, 114 umfasst wiederum einen Primärkolben 112 und einen Sekundärkolben 114, welche im Zylinder 110 drei nacheinander angeordnete Hydraulikkammern 111, 116, 118 definieren. Eine erste Hydraulikkammer 111 ist über einen Fluidpfad 268 mit der zweiten Zylinder-Kolben-Einrichtung fluidisch gekoppelt. Eine zweite Hydraulikkammer 116 ist mit dem ersten Bremskreis 10 und eine zweite Hydraulikkammer 118 ist mit dem zweiten Bremskreis 20 der Bremsanlage 1000a fluidisch gekoppelt. Bezüglich der Funktionsweise der ersten Zylinder-Kolben-Einrichtung 110, 112, 114 sei auf die entsprechenden Textstellen der Fig. 1 verwiesen.

Die erste Zylinder-Kolben-Einrichtung 110, 112, 114 und die dritte Zylinder-Kolben-Einrichtung 120, 122 sind im montierten Zustand räumlich nacheinander angeordnet. Die dritte Zylinder-Kolben-Einrichtung 120, 122 ist hierbei koaxial zur ersten Zylinder-Kolben-Einrichtung 110, 112, 114 angeordnet. Der dritte Kolben 122 der dritten Zylinder-Kolben-Einrichtung 120, 122 ist wiederum mit einem ersten Stößel 125 und mit einem zweiten Stößel 123 mechanisch gekoppelt. Der erste Stößel 125 ist in bekannter Weise mit dem Bremspedal 126 zur Übertragung einer Pedalbetätigung auf den dritten Kolben 122 gekoppelt. Der zweite Stößel 123 ist an einem Ende mit dem dritten Kolben 122 gekoppelt. Er erstreckt sich entlang der Kammer 124 der dritten Zylinder-Kolben-Einrichtung 120, 122 bis in die nachgeordnet erste Zylinder-Kolben-Einrichtung 110, 112, 114. Der dritte Zylinder 120 weist hierzu eine Bohrung am Zylinderboden zur Durchführung des Stößels 123 auf. Die Bohrung wird durch Dichtungselemente abgedichtet, damit kein Hydraulikfluid aus der Kammer 123 entweichen.

Genauso weist der erste Zylinder 110 der ersten Zylinder-Kolben-Einrichtung 110, 112, 114 an seiner der dritten Zylinder-Kolben-Einrichtung 120, 122 zugewandten Stirnseite einen bezüglich des ersten Zylinders 110 koaxial angeordneten und nach innen ausgebildeten rohrförmigen Schacht 127 zur Aufnahme des aus der dritten Zylinder-Kolben-Einrichtung 120, 126 herausragenden Stößelabschnitts 123 auf. Im montierten Zustand ragt der erste Stößelabschnitt 123 in den Schacht 127 der ersten Zylinder-Kolben-Einrichtung 110, 112, 114 hinein und ist vom Primärkolben 112 lediglich durch eine schmale Lücke 152 räumlich getrennt. Der Primärkolben 112 weißt in der in Fig. 2 gezeigten Ausgestaltung an seiner Rückseite ein U-förmiges Profil auf, wobei der Schacht 127 in der U-förmigen Ausnehmung des Primärkolbens 112 hineinragt. Die Hydraulikkammer 111 wird durch die Kolbenrückseite und die Innenwand des ersten Zylinders 110 und des Schachts 127 definiert.

Der Stößel 123 dient als Kraftübertragungseinrichtung zur Übertragung einer Fußkraft auf den Primärkolben 112 in einem Push-Through-Betrieb. Im Push-Through-Betrieb findet keine elektrohydraulische Betätigung des Primärkolbens 112 statt. Die Lücke 152 zwischen Stößel 123 und der Rückseite des Primärkolbens 112 kann bei Niederdrücken des Pedals 126 schnell überwunden werden. Der zweite Stößel 123 gelangt in Anlage mit dem Primärkolben 112 und überträgt jede weitere Bewegung direkt auf den Primärkolben 112, wodurch ein Hydraulikdruck in der ersten Zylinder-Kolben-Einrichtung 110, 112, 114 aufgebaut werden kann. Im Brake-By-Wire-Betrieb erfolgt die Betätigung des Primärkolbens 112 durch den in der zweiten Zylinder-Kolben-Einrichtung 260, 262 aufgebauten Betätigungsdruck. Die hydraulische Betätigung des Primärkolbens 112 bewirkt, dass der Primärkolben 112 dem Stößel 123 genügend vorauseilt, so dass im Brake-by-Wire-Betrieb durch Niederdrücken des Bremspedals 126 die Lücke 152 nicht überwunden werden kann. Auf diese Weise kann garantiert werden, dass im Brake-by-Wire-Betrieb der Hydraulikdruck ausschließlich mit Hilfe der zweiten Zylinder-Kolben-Einrichtung 260, 262 aufgebaut bzw. eingestellt wird.

Es wird nun die zweite Zylinder-Kolben-Einrichtung 260, 262 und der mit der zweiten mit der zweiten Zylinder-Kolben-Einrichtung 260, 262 gekoppelte elektromechanische Aktuator 160 beschrieben.

Der elektromechanische Aktuator 160 umfasst einen Elektromotor 161 sowie ein mit dem Elektromotor 161 gekoppeltes Getriebe 162, 163 zur Übertragung der Motorbewegung auf den zweiten Kolben 262 der zweiten Zylinder-Kolben-Einrichtung 260, 262. Im Ausführungsbeispiel ist das Getriebe eine Anordnung aus einer drehbar gelagerten Mutter 163 und einer mit der Mutter 163 (z.B. über Wälzkörper wie Kugeln) in Eingriff stehenden und in axialer Richtung beweglichen Spindel 162. In anderen Ausführungen können Zahnstangengetriebe oder andere Getriebetypen zum Einsatz kommen.

Der Elektromotor 161 besitzt im vorliegenden Ausführungsbeispiel eine zylindrische Bauform und erstreckt sich konzentrisch zum Getriebe 162, 163. Genauer gesagt ist der Elektromotor 161 radial außen bezüglich des Getriebes 162, 163 angeordnet. Ein Rotor (nicht dargestellt) des Elektromotors 161 ist drehfest mit der Getriebemutter 163 gekoppelt, um diese in Drehung zu versetzen. Eine Drehbewegung der Mutter 163 überträgt sich derart auf die Spindel 162, dass eine axiale Verschiebung der Spindel 162 resultiert. Die in Fig. 1 linke Stirnseite der Spindel 162 ist mit dem zweiten Kolben 262 mechanisch gekoppelt oder koppelbar. Eine axiale Verschiebung der Spindel 162 überträgt sich somit unmittelbar auf den zweiten Kolben 162, wobei dieser im zweiten Zylinder 260 entlang des Zylinders 260 verschoben wird.

Der elektromechanische Aktuator 160 ist somit dazu geeignet, über den Kolben 262 einen Betätigungsdruck für den Primärkolben 112 der ersten Zylinder-Kolben-Einrichtung 110, 112, 114 eigenständig (d.h. fußkraftunabhängig) aufzubauen. Die Höhe des Druckaufbaus kann über wenigstens einen Ansteuerungswert der ECU 200 festgelegt werden, welcher eine Information darüber enthält, wie stark der Aktuator 160 betätigt werden soll (bzw. die Spindel 162 in Betätigungsrichtung zur Hydraulikdruckerzeugung verschoben werden soll). Der Ansteuerungswert kann auf der Grundlage einer mit dem Bremspedal 126 oder der Pedalschnittstelle gekoppelten Sensorik (z.B. mittels Weg- und/oder Kraftsensorik 2002) ermittelt werden. Der in der zweiten Kammer 264 aufgebaute Betätigungsdruck wird über den Fluidpfad 268 an den Primärkolben 112 der ersten Zylinder-Kolben-Einrichtung 110, 112, 114 übertragen. Der Primärkolben 112 und der damit gekoppelte Sekundärkolben 114 werden aufgrund des anliegenden hydraulischen Druckes so lange betätigt (also nach links in Fig. 2 verschoben), bis der in den Hydraulikkammern 116 und 118 erzeugte Hydraulikdruck (und somit an den Bremsen 401-404 anliegende Bremsdruck) dem in der ersten Hydraulikkammer 111 anliegenden Betätigungsdruck entspricht. Durch die bereits in Zusammenhang mit Fig. 1 beschriebene hydraulische Kopplung von erster Zylinder-Kolben-Einrichtung 110, 112, 114 und zweiter
von erster Zylinder-Kolben-Einrichtung 110, 112, 114 und zweiter Zylinder-Kolben-Einrichtung 260, 262 kann ein Hydraulikdruck an den Radbremsen 401-404 in gleicher Weise erzeugt werden, wie wenn der elektromechanische Aktuator direkt mit der ersten Zylinder-kolben-Einrichtung 110, 112, 114 gekoppelt wäre. Insbesondere erlaubt die serielle Anordnung der beiden Zylinder-Kolben-Einrichtungen die Realisierung einer hydraulischen Kraftverstärkung so wie in Fig. 1 in Zusammenhang mit dem Beispiel beschrieben.

Nach Beschreibung der Baugruppe 100a erfolgt nun die Beschreibung der in Fig. 2 gezeigten Ventile der Radbremse 1000a.

Wie in Fig. 2 gezeigt umfasst die Bremsanlage 1000a (bzw. eine der Bremsanklage 1000a zugeordete hydraulische Steuereinheit, oder HCU) eine erste Gruppe von vier elektrisch betätigbaren Ventilen 301-304, wobei jeder Radbremse 401-404 genau ein Ventil 301-304 zugeordnet ist. Das einer jeden Radbremse 401-404 zugeordnete Ventil 301-304 ist dazu ausgelegt, die Radbremse 401-404, je nach Schaltzustand des Ventils 301-304, von der ersten Zylinder-Kolben-Einrichtung 110, 112, 114 hydraulisch zu koppeln oder hydraulisch zu entkoppeln. Die zeitliche Ansteuerung der einzelnen Ventile 301-304 erfolgt hierbei über die ECU.

Beispielsweise können die Ventile 301-304 durch die ECU in einem ZeitmultiplexBetrieb betätigt werden. Dabei kann jedem Ventil 301-304 (und damit jeder Radbremse 401-404) wenigstens ein Zeitschlitz für eine Ventilbetätigung zugeordnet sein. Diese Zuordnung schließt dabei nicht aus, dass einzelne Ventile 301-304 über mehrere Zeitschlitze hinweg geöffnet oder geschlossen gehalten werden oder mehr als zwei Ventile gleichzeitig geöffnet sind. Auf diese Weise kann bei einer Betriebsbremsung (wenn die Baugruppe 100 im Normalbetrieb ist) der durch die Aktuator-Baugruppe 100 aufgebaute Hydraulikdruck an den Radbremsen 401-404 radindividuell oder radgruppenindividuell zum Zweck einer Fahrdynamikregelung (also z.B. im ABS- und/oder ASR- und/oder ESP-Regelbetrieb) eingeregelt werden.

Die Bremsanlage 1000a umfasst ferner eine zweite Gruppe von vier elektrisch betätigbaren Ventilen 311-314, wobei jeder Radbremse 401-404 genau ein Ventil 311-314 zugeordnet ist. Die Ventile 311-314 sind hierbei in den Rückleitungen der Radbremsen 401-404 angeordnet, wobei die Rückleitungen der Radbremsen 401-404 eines Bremskreises 10, 20 am Ventilauslass der Ventile 311-314 in die dem Bremskreis 10, 20 zugeordnete Rückleitung 30, 40 münden. Die Rückleitungen 30, 40 münden in das Hydraulikfluidreservoir 170. Die beiden Ventile 311-314 nehmen im unbetätigten Zustand jeweils eine geschlossene Ventilstellung ein, so dass kein Hydraulikfluid von den jeweiligen Radbremsen 401-404 in das drucklose Hydraulikfluidreservoir 170 strömen kann. Sie können im Zuge einer Fahrdynamikregelung (z.B. ABS- und/oder ASR und-oder ESP-Regelbetrieb) mittels elektrischer Ansteuerung der ECU 200 in eine geöffnete Ventilstellung geschaltet werden, um Hydraulikfluid über die jeweiligen Bremskreise 10, 20 in das drucklose Hydraulikfluidreservoir 170 kontrolliert abfließen zu lassen.

Die beiden Bremskreise 10, 20 sowie die den beiden Bremskreisen 10, 20 zugeordneten Rückleitungen 30, 40 können jeweils über ein Rückschlagventil 31, 41 miteinander fluidisch gekoppelt sein. Die Rückschlagventile 31, 41 sind hierbei von der ersten Zylinder-Kolben-Einrichtung 110, 112, 114 aus betrachtet vor den Ventilen 301-304, 311-314 in einem den ersten Bremskreis 10 mit der ersten Rückleitung 40 und in einem den zweiten Bremskreis 20 mit der zweiten Rückleitung 30 koppelnden Fluidpfad angeordnet. Die beiden Rückschlagventile 31, 41 sind dabei derart angeordnet, dass sie kein Hydraulikfluid vom jeweiligen Bremskreis 10, 20 in die jeweilige Rückleitung 30, 40 fließen lassen. Andererseits kann jedoch über die Rückschlagventile direkt Hydraulikfluid vom Hydraulikfluidreservoir 170 in die beiden Kammern 116, 118 der ersten Zylinder-Kolben-Einrichtung 110, 112, 114 strömen. Dies kann beispielsweise dann der Fall sein, wenn sich der Primärkolben 112 und der Sekundärkolben 114 im Rückhub befinden und in den Kammern 116, 118 ein Unterdruck entsteht. Auf diese Weise kann sichergestellt werden, dass die Kammern 116, 118 der ersten Zylinder-Kolben-Einrichtung 110 auch nach einer Betätigung mit genügend Hydraulikfluid versorgt sind.

Nach Beschreibung der Ventile 31, 41 301-304, 311-314 erfolgt nun die Beschreibung der im Fluidpfad 140 angeordneten Ventile 132, 134, 136.

Im Gegensatz zu der in Fig. 1 gezeigten Bremsanlage 1000, sind im Fluidpfad 140 der in Fig. 2 gezeigten Bremsanlage 1000a neben dem elektrisch betätigbaren Ventil 132 noch zwei weitere Ventile 134, 136 angeordnet. Diese beiden Ventile 134, 136 sind als druckgesteuerte Überdruckventile ausgebildet. Sie sind dazu vorgesehen, ein im Push-Through-Betrieb der Bremsanlage 1000a aus der dritten Zylinder-Kolben-Einrichtung 120, 122 verdrängtes Hydraulikfluid zusätzlich in wenigstens einen Bremskreis 10, 20 der Bremsanlage 1000a einzuspeisen. Das zusätzlich eingeleitete Hydraulikfluid in die Bremskreise 10, 20 kann helfen, ein an den Radbremsen 401-404 vorliegendes Lüftspiel im Push-Through-Betrieb rasch zu überwinden.

Der Fluidpfad 140 teilt sich nach dem elektrisch betätigbaren Ventil 132 in einen ersten Zweig 140a und in einen zweiten Zweig 140b auf, wobei der erste Zweig 140a in den ersten Bremskreis 10 mündet und der zweite Zweig 140b in das drucklose Hydraulikfluidreservoir 170 oder in der zum drucklosen Hydraulikfluidreservoir 170 führenden Rückleitung 40 mündet. Das erste Überdruckventil 134 ist in dem ersten Zweig 140a des zweiten Fluidpfads 140 angeordnet. Das zweite Überdruckventil 136 ist in dem zweiten Zweig 140b des zweiten Fluidpfads 140 angeordnet. Im Normalbetrieb der Bremsanlage 1000a ist das elektrisch betätigbare Ventil 132 in einen geschlossen Zustand geschaltet, so dass den nachgeordneten Ventilen 134, 136 keine Bedeutung zukommt.

Bei einem Push-Through-Bremsbetrieb bleibt das Ventil 132 unbetätigt und somit in einer geöffneten Ventilstellung. Ein aus dem Hydraulikzylinder 120 verdrängtes Hydraulikfluid im Push-Through-Betrieb kann dann über das geöffnete Ventil 132 zu den stromabwärts angeordneten ersten und zweiten Überdruckventilen 134, 136 strömen und über diese Ventile (abhängig vom Hydraulikdruck im ersten Bremskreis 10) entweder in den ersten Bremskreis 10 oder in das Hydraulikfluidreservoir 170 abfließen.

Das erste Überdruckventil 134 ist in der Gestalt eines Rückschlagventils ausgebildet. Das Rückschlagventil 134 ist derart angeordnet, dass es bei geöffneter Ventilstellung lediglich Hydraulikfluid vom Hydraulikzylinder 120 in den ersten Bremskreis 10 strömen lässt, jedoch in umgekehrter Richtung absolut sperrt. Das erste Rückschlagventil 134 ist als federbelastetes Rückschlagventil ausgebildet, das auf einen niedrigen Überströmdruck begrenzt ist (z.B. von 0.3 bar). Somit kann im Push-Through-Betrieb Hydraulikfluid aus dem dritten Hydraulikzylinder 120 über das Ventil 132 (dieses ist im Push-Through-Betrieb geöffnet) und das nachgeschaltete Rückschlagventil 134 in den ersten Bremskreis 10 (und über die damit fluidisch gekoppelte erste Zylinder-Kolben-Einrichtung 110, 112, 114 auch in den zweiten Bremskreis 20) immer dann eingespeist werden, wenn der durch Verschieben des dritten Kolbens 122 im dritten Zylinder 120 erzeugte Hydraulikdruck höher als der Ventilüberströmdruck und der am Ventilauslass des Rückschlagventils 134 anliegende Hydraulikdruck ist.

Das zweite Überdruckventil 136 ist als druckgesteuertes Überdruckventil 136 ausgebildet, welches bei Erreichen eines vorgegebenen Druckes in der ersten Zylinder-Kolben-Einrichtung 110, 112, 114 oder im ersten Bremskreis 10 (beispielsweise 10 bar) von einem geschlossenen Zustand in einen geöffneten Zustand schaltet. Das zweite Überdruckventil 136 ist zu Steuerungszwecken mit dem ersten Bremskreis 10 fluidisch gekoppelt (siehe gestrichelte Linie am Ventil 136 in Fig. 2). Bei Erreichen des vorgegebenen Druckes im ersten Bremskreis 10 schaltet das Überdruckventil 136 in eine geöffnete Ventilstellung. Das während des Push-Through-Betriebs im Fluidpfad 140 und an den Ventileinlässen der Ventile 134, 136 aufgestaute Hydraulikfluid kann dann über den zweiten Teilpfad 140b drucklos in das drucklose Hydraulikfluidreservoir 170 abströmen. Das zweite Überdruckventil 136 legt somit fest, wie lange Hydraulikfluid aus der dritten Zylinder-Kolben-Einrichtung 120, 122 in die Bremskreise 10, 20 eingespeist wird. Insbesondere verhindert das Ventil 136, ein unnötiges Aufstauen von Hydraulikfluid am ersten Rückschlagventil 134, wenn beispielsweise während der Push-Through-Phase der in der ersten Zylinder-Kolben-Einrichtung 110, 112, 114 erzeugte Druck sich an den im dritten Zylinder 120 erzeugten Druck annähert oder gar übersteigt.

Im Folgenden wird nun der Fluidpfad 340 und das darin angeordnete elektrisch betätigbare Ventil 330 beschrieben.

Der Fluidpfad 340 mündet an einem Ende in die erste Hydraulikkammer 111 der ersten Zylinder-Kolben-Einrichtung 110, 112, 114 und mit einem zweiten Ende in die Hydraulikkammer 124 der dritten Zylinder-Kolben-Einrichtung 120, 122. Der Fluidpfad 340 ermöglicht somit eine wahlweise fluidische Kopplung der dritten Zylinder-Kolben-Einrichtung 120, 122 und des damit gekoppelten Simulatorkreises 145 mit der ersten Hydraulikkammer 111 bzw. der damit gekoppelten zweite Zylinder-Kolben-Einrichtung 260, 262. Diese fluidische Kopplung kann zur Implementierung automatischer Testverfahren oder eines automatischen Entlüftungsverfahrens für den Simulatorkreis 145 eingesetzt werden, wie im Folgenden kurz erläutert wird.

Das im Fluidpfad 340 angeordnete elektrisch betätigbare Ventil 330 nimmt im unbetätigten (unbestromten) Zustand eine geschlossene Ventilstellung ein. Das Ventil 330 bleibt während des Normalbetriebs und während des Push-Through-Betriebs der Baugruppe 100 geschlossen. Es kann somit kein Hydraulikfluid von der zweiten Zylinder-Kolben-Einrichtung 260, 262 über den Fluidpfad 340 in die dritte Zylinder-Kolben-Einrichtung 120, 122 bzw. in den damit fluidisch gekoppelten Simulatorkreis 145 gelangen.

Außerhalb des Bremsbetriebs kann eine fluidisch Kopplung der zweiten Zylinder-Kolben-Einrichtung 260, 262 mit der dritten Zylinder-Kolben-Einrichtung 120, 122 und dem Simulatorkreis 145 im Rahmen eines automatischen Testverfahrens oder eines automatischen Entlüftungsverfahrens für den Simulatorkreis 145 gewünscht sein.

Beispielsweise kann im Rahmen eines außerhalb eines Bremsbetriebs ablaufenden Testverfahrens oder Entlüftungsverfahrens für den Simulatorkreis 145 das Ventil 330 geöffnet, das Ventil 132 im parallelen Fluidpfad 132 geschlossen und der Aktuator 160 betätigt werden. Somit kann Hydraulikfluid aus der Kammer 264 der zweiten Zylinder-Kolben-Einrichtung 260, 262 direkt in die dritte Zylinder-Kolben-Einrichtung 120,122 und den damit gekoppelten Simulatorkreis 145 gefördert werden. Konkret strömt das geförderte Hydraulikfluid über den Fluidpfad 268, über die Kammer 111, den freigeschalteten Fluidpfad 340, die Kammer 124 und den Fluidpfad 141 in den Hydraulikdruckspeicher 144 des Simulatorkreises 145. Der Hydraulikdruckspeicher 144 erzeugt dabei einen Gegendruck. Das verschobene Hydraulikfluid kann in Abhängigkeit einer Druckzunahme in der Kammer 264 gemessen werden. Das während der Aktuatorbetätigung verschobene Hydraulikfluidvolumen kann hierbei aus einer Erfassung einer Betätigungsbewegung des elektromechanischen Aktuators 160 (z.B. aus der Motorstellung und dem bekannten Übersetzungsverhältnis des Getriebes) ermittelt werden. Der Druckanstieg kann über einen Drucksensor in der Hydraulikkammer 264 oder im Simulatorkreis ermittelt werden (nicht dargestellt in Fig. 1). Die gewonnene Druck-Volumen-Charakteristik kann mit einer hinterlegten Druck-Volumen-Charakteristik verglichen werden und daraus eine Aussage über den Entlüftungsgrad des Simulatorkreises 145 getroffen werden. Denn mit Luft verschmutztes Fluid ist komprimierbar und zeigt eine im Vergleich zu einem reinen Fluid andere Druck-Volumen-Charakteristik. Um insbesondere zu vermeiden, dass der durch die zweite Zylinder-Kolben-Einrichtung aufgebaute und in dem Simulatorkreis 145 angelegte Druck teilweise durch Verschiebung des Primärkobens 112 in der ersten Hydraulikkammer 112 verloren geht, können während des Testverfahrens die Ventile 301-304 zu den Radbremsen 401-404 in einen geschlossenen Ventilzustand geschaltet werden. Das in den Simulatorkreis 145 verschobene Hydraulikfluid kann im Anschluss des Testverfahrens über den Fluidpfad 140 in das Hydraulikfluidreservoir 170 abgeleitet werden. Hierbei muss lediglich das in dem Fluidpfad 140 angeordnete elektrisch betätigbare Ventil 132 wieder in eine geöffnete Ventilstellung geschaltet werden.

Zusammenfassend bleibt festzuhalten, dass die hier beschriebenen Bremsanlagen 1000, 1000a und Hydraulikdruckerzeuger-Baugruppen 100, 100a für die Realisierung eines Brake-by-Wire-Bremsbetriebes und eines Push-Through-Bremsbetriebes ausgebildet sind. Insbesondere ist der hier beschriebene Hydraulikdruckerzeuger 100, 100a auch zur Realisierung eines automatischen Testverfahrens und eines Entlüftungsverfahrens des Simulatorkreises der Bremsanlage 1000, 1000a ausgebildet.

Wie in den eingangs erwähnten Bremsanlagen-Architekturen wird gemäß der vorliegenden Bremsanlage-Architektur ein Hydraulikdruck an den Radbremsen 401-404 allein über die erste Zylinder-Kolben-Einrichtung 110, 112, 114 aufgebaut. Die erste Zylinder-Kolben-Einrichtung 110, 112, 114 entspricht somit funktionell einem Hauptbremszylinder der Fahrzeugbremsanlage. Im Gegensatz zu den eingangs erwähnten Bremsanlagen-Architekturen erfolgt im Brake-by-Wire-Betrieb die Betätigung des wenigstens einen ersten Kolbens der ersten Zylinder-Kolben-Einrichtung 110, 112, 114 jedoch hydraulisch über die zweite Zylinder-Kolben-Einrichtung 260, 262. Die hier beschrieben hydraulische Betätigung hat den Vorteil, dass der elektromechanische Aktuator nicht mit der ersten Zylinder-Kolben-Einrichtung 110, 112, 114 unmittelbar mechanisch gekoppelt werden muss. Auf diese Weise kann der Aufbau der Baugruppe 100 weiter vereinfacht werden. Insbesondere kann durch parallele Anordnung der ersten Zylinder-Kolben-Einrichtung 110, 112, 114 und der zweiten Zylinder-Kolben-Einrichtung 260, 262 die Baulänge der Baugruppe 100, 100a verkürzt werden. Ferner kann durch geeignete Dimensionierung der ersten Zylinder-Kolben-Einrichtung 110, 112, 114 und der zweiten Zylinder-Kolben-Einrichtung 260, 262 eine hydraulische Kraftverstärkung realisiert werden, wodurch die vom elektromechanischen Aktuator 160 aufzuwendende Betätigungskraft weiter reduziert werden kann. Es können somit im Vergleich zu den eingangs erwähnten Bremsanalgen weniger leistungsfähige elektromechanische Aktuatoren eingesetzt werden, um einen erforderlichen Hydraulikdruck während eines Brake-by-Wire-Bremsbetriebs zu erzeugen.

## Patentansprüche

1. Elektrohydraulische Kraftfahrzeug-Bremsanlage (1000a), umfassend:
eine mit wenigstens einer Radbremse (401-404) der Bremsanlage (1000a) fluidisch koppelbare erste Zylinder-Kolben-Einrichtung (110, 112, 114) zur Hydraulikdruckerzeugung an der wenigstens einen Radbremse (401-404), wobei die erste Zylinder-Kolben-Einrichtung (110, 112, 114) wenigstens einen ersten Kolben (112, 114) umfasst;
eine zweite Zylinder-Kolben-Einrichtung (260, 262), die wenigstens einen zweiten Kolben (262) umfasst;
einen auf den zweiten Kolben (262) der zweiten Zylinder-Kolben-Einrichtung (260, 262) einwirkenden elektromechanischen Aktuator (160);
wobei die zweite Zylinder-Kolben-Einrichtung (260, 262) ausgangsseitig mit dem wenigstens einen ersten Kolben (112, 114) der ersten Zylinder-Kolben-Einrichtung (110, 112, 114) fluidisch gekoppelt oder koppelbar ist, um einen bei Betätigung des elektromechanischen Aktuators (160) in der zweiten Zylinder-Kolben-Einrichtung (260, 262) erzeugten Hydraulikdruck für eine Betätigung des wenigstens einen ersten Kolbens (112, 114) der ersten Zylinder-Kolben-Einrichtung (110, 112, 114) bereitzustellen; und
eine mit einem Bremspedal (126) koppelbare Pedalschnittstelle mit einer eine Hydraulikkammer (124) umfassenden, mit einem Simulatorkreis (145) gekoppelten dritten Zylinder-Kolben-Einrichtung (120, 122), welche mit der ersten Zylinder-Kolben-Einrichtung (110, 112, 114) zur Hydraulikdruckerzeugung wahlweise fluidisch koppelbar ist;
wobei die dritte Zylinder-Kolben-Einrichtung (120, 122) einen Hydraulikzylinder (120) mit einem darin verschiebbar aufgenommenen und mit dem Bremspedal (126) verbundenen Kolben (122) umfasst, wobei der Hydraulikzylinder (120) und die dem Bremspedal abgewandte Seite des Kolbens (122) die Hydraulikkammer (124) definieren, welche mit dem Simulatorkreis (145) über einen Fluidpfad (141) fluidisch gekoppelt ist, wobei der Simulatorkreis einen Hydraulikdruckspeicher (144) umfasst, der als Kolben-Zylinder-Anordnung realisiert ist, wobei der im Zylinder verschiebbar aufgenommene Kolben durch eine Feder vorgespannt ist; und
wobei die erste Zylinder-Kolben-Einrichtung (110, 112, 114) wenigstens zwei durch einen Zylinder (110) und den wenigstens einen ersten Kolben (112, 114) definierte Hydraulikkammern (111, 116, 118) aufweist, wobei die erste Kammer (111) einlassseitig mit der zweiten Zylinder-Kolben-Einrichtung (260, 262) fluidisch gekoppelt ist, und wobei wenigstens eine zweite Kammer (116, 118) mit wenigstens einem Bremskreis (10, 20) der Bremsanlage (1000a) fluidisch koppelbar ist;
**dadurch gekennzeichnet, dass**
die dritte Zylinder-Kolben-Einrichtung (120, 122) über die erste Kammer (111) der ersten Zylinder-Kolben-Einrichtung (110, 112, 114) mit der zweiten Zylinder-Kolben-Einrichtung (260, 262) fluidisch koppelbar ist.

2. Elektrohydraulische Bremsanlage (1000a) nach Anspruch 1, wobei die Hydraulikdruckerzeugung an der wenigstens einen Radbremse (401-404) allein über die erste Zylinder-Kolben-Einrichtung (110, 112, 114) erfolgt.

3. Elektrohydraulische Bremsanlage (1000a) nach Anspruch 1 oder 2, wobei in einem Push-Through-Betrieb der Bremsanlage (1000a) die dritte Zylinder-Kolben-Einrichtung (120, 122) mit der ersten Zylinder-Kolben-Einrichtung (110, 112, 114) gekoppelt ist, um eine fußkraftabhängige Betätigung des ersten Kolbens (112, 114) zur Hydraulikdruckerzeugung zu ermöglichen.

4. Elektrohydraulische Bremsanlage (1000a) nach einem der vorhergehenden Ansprüche, wobei die zweite Zylinder-Kolben-Einrichtung (260, 262) dazu vorgesehen ist, in einem Brake-by-Wire-Betrieb der Bremsanlage (1000a) den Hydraulikdruck zur hydraulischen Betätigung des ersten Kolbens (112, 114) der ersten Zylinder-Kolben-Einrichtung (110, 112, 114) bereitzustellen.

5. Elektrohydraulische Bremsanlage (1000a) nach Anspruch 4, wobei die Bereitstellung des Hydraulikdrucks in Abhängigkeit eines erfassten Bremswunsches oder eines Befehls eines Fahrdynamikregelungsprogramms erfolgt.

6. Elektrohydraulische Bremsanlage (1000a) nach einem der vorhergehenden Ansprüche, wobei die erste Zylinder-Kolben-Einrichtung (110, 112, 114) und die zweite Zylinder-Kolben-Einrichtung (260, 262) über einen Fluidpfad (268) fluidisch in Serie geschaltet sind.

7. Elektrohydraulische Bremsanlage (1000a) nach einem der vorhergehenden Ansprüche, wobei eine Wirkfläche des wenigsten einen ersten Kolbens (112, 114) und eine Wirkfläche des zweiten Kolbens (262) in einem vorgegebenen Verhältnis zueinander stehen.

8. Elektrohydraulische Bremsanlage (1000a) nach Anspruch 7, wobei die Wirkfläche des wenigstens einen ersten Kolbens (112, 114) größer als die Wirkfläche des zweiten Kolbens (262) ist.

9. Elektrohydraulische Bremsanlage (1000a) nach Anspruch 1, wobei die wenigstens eine zweite Kammer (116, 118) zwei Hydraulikkammern (116, 118) umfasst, die im Zylinder (110) nacheinander angeordnet sind und jeweils mit einem Bremskreis (10, 20) der Bremsanlage (1000a) fluidisch gekoppelt oder koppelbar sind.

10. Elektrohydraulische Bremsanlage (1000a) nach einem der vorhergehenden Ansprüche, wobei die erste Zylinder-Kolben-Einrichtung (260, 262) und die dritte Zylinder-Kolben-Einrichtung (120, 122) räumlich hintereinander angeordnet sind.

11. Elektrohydraulische Bremsanlage (1000a) nach einem der vorhergehenden Ansprüche, wobei die erste Zylinder-Kolben-Einrichtung (110, 112, 114) und die zweite Zylinder-Kolben-Einrichtung (260, 262) räumlich im Wesentlichen parallel zueinander angeordnet sind.

12. Elektrohydraulische Bremsanlage (1000a) nach einem der vorhergehenden Ansprüche, ferner umfassend ein Steuergerät oder Steuergerätsystem (200) zur elektrischen Ansteuerung des elektromechanischen Aktuators im Brake-by-Wire-Betrieb.

## Claims

1. An electro-hydraulic motor vehicle brake system (1000a), comprising:
a first cylinder-piston device (110, 112, 114), which can be fluidically coupled to at least one wheel brake (401-404) of the brake system (1000a), for generating hydraulic pressure on the at least one wheel brake (401-404), wherein the first cylinder-piston device (110, 112, 114) comprises at least one first piston (112, 114);
a second cylinder-piston device (260, 262), which comprises at least one second piston (262);
an electromechanical actuator (160) acting on the second piston (262) of the second cylinder-piston device (260, 262);
wherein the second cylinder-piston device (260, 262) is or can be fluidically coupled at an output side to the at least one first piston (112, 114) of the first cylinder-piston device (110, 112, 114) in order to provide hydraulic pressure, which is generated in the second cylinder-piston device (260, 262) upon actuation of the electromechanical actuator (160), for actuating the at least one first piston (112, 114) of the first cylinder-piston device (110, 112, 114); and
a pedal interface, which can be coupled to a brake pedal (126), with a third cylinder-piston device (120, 122), comprising a hydraulic chamber (124) and being coupled to a simulator circuit (145), which can be selectively fluidically coupled to the first cylinder-piston device (110, 112, 114) for generating hydraulic pressure;
wherein the third cylinder-piston-device (120, 122) comprises a hydraulic cylinder (120) with a piston (122), being displaceably received therein and connected to the brake pedal (126), wherein the hydraulic cylinder (120) and the side of the piston (122) facing away from the brake pedal define the hydraulic chamber (124), which is fluidically coupled to the simulator circuit (145) via a fluid path, wherein the simulator circuit comprises a hydraulic pressure store (144) which is realised as a piston-cylinder arrangement, wherein the piston which is displaceably received in the cylinder is pre-tensioned by a spring; and
wherein the first cylinder-piston device (110, 112, 114) has at least two hydraulic chambers (111, 116, 118) defined by a cylinder (110) and the at least one first piston (112, 114), wherein the first chamber (111) is fluidically coupled at the inlet side to the second cylinder-piston device (260, 262), and wherein at least one second chamber (116, 118) can be fluidically coupled to at least one brake circuit (10, 20) of the brake system (1000a);
**characterized in that**
the third cylinder-piston device (120, 122) can be fluidically coupled to the second cylinder-piston device (260, 262) by way of the first chamber (111) of the first cylinder-piston device (110, 112, 114).

2. An electro-hydraulic brake system (1000a) according to claim 1, wherein the generation of hydraulic pressure on the at least one wheel brake (401-404) is effected solely by way of the first cylinder-piston device (110, 112, 114).

3. An electro-hydraulic brake system (1000a) according to claim 1 or 2, wherein the third cylinder-piston device (120, 122) is coupled to the first cylinder-piston device (110, 112, 114) in a push-through operation of the brake system (1000a) in order to enable a foot-force-dependent actuation of the first piston (112, 114) for generating hydraulic pressure.

4. An electro-hydraulic brake system (1000a) according to one of the preceding claims, wherein the second cylinder-piston device (260, 262) is provided to supply the hydraulic pressure for the hydraulic actuation of the first piston (112, 114) of the first cylinder-piston device (110, 112, 114) in a brake-by-wire operation of the brake system (1000a).

5. An electro-hydraulic brake system (1000a) according to claim 4, wherein the provision of the hydraulic pressure takes place as a function of a detected braking intention or a command from a vehicle dynamics management program.

6. An electro-hydraulic brake system (1000a) according to one of the preceding claims, wherein the first cylinder-piston device (110, 112, 114) and the second cylinder-piston device (260, 262) are fluidically connected in series by way of a fluid path (268).

7. An electro-hydraulic brake system (1000a) according to one of the preceding claims, wherein an effective surface of the at least one first piston (112, 114) and an effective surface of the second piston (262) are at a predetermined ratio to one another.

8. An electro-hydraulic brake system (1000a) according to claim 7, wherein the effective surface of the at least one first piston (112, 114) is greater than the effective surface of the second piston (262).

9. An electro-hydraulic brake system (1000a) according to claim 1, wherein the at least one second chamber (116, 118) surrounds two hydraulic chambers (116, 118), which are arranged in succession in the cylinder (110) and are or can be fluidically coupled in each case to a brake circuit (10, 20) of the brake system (1000a).

10. An electro-hydraulic brake system (1000a) according to one of the preceding claims, wherein the first cylinder-piston device (260, 262) and the third cylinder-piston device (120, 122) are arranged in spatial succession.

11. An electro-hydraulic brake system (1000a) according to one of the preceding claims, wherein the first cylinder-piston device (110, 112, 114) and the second cylinder-piston device (260, 262) are arranged substantially spatially parallel to one another.

12. An electro-hydraulic brake system (1000a) according to one of the preceding claims, further comprising a control device or control device system (200) for electrically controlling the electro-mechanical actuator in the brake-by-wire operation.

## Revendications

1. Système de freinage électrohydraulique de véhicule à moteur (1000a), comprenant :
un premier dispositif à cylindre et piston (110, 112, 114) pouvant être couplé fluidiquement à au moins un frein de roue (401-404) du système de freinage (1000a) pour générer une pression hydraulique sur ledit au moins un frein de roue (401-404), le premier dispositif à cylindre et piston (110, 112, 114) comprenant au moins un premier piston (112, 114) ;
un deuxième dispositif à cylindre et piston (260, 262) qui comprend au moins un deuxième piston (262) ;
un actionneur électromécanique (160) agissant sur le deuxième piston (262) du deuxième dispositif à cylindre et piston (260, 262) ;
dans lequel le deuxième dispositif à cylindre et piston (260, 262) est couplé ou peut être couplé fluidiquement côté sortie audit au moins un premier piston (112, 114) du premier dispositif à cylindre et piston (110, 112, 114) pour fournir une pression hydraulique générée lors de l'actionnement de l'actionneur électromécanique (160) dans le deuxième dispositif à cylindre et piston (260, 262), pour un actionnement dudit au moins un premier piston (112, 114) du premier dispositif à cylindre et piston (110, 112, 114) ; et
une interface de pédale pouvant être couplée à une pédale de frein (126), qui comporte un troisième dispositif à cylindre et piston (120, 122) comprenant une chambre hydraulique (124), qui est couplé à un circuit de simulation (145) et peut être couplé fluidiquement sélectivement au premier dispositif à cylindre et piston (110, 112, 114) pour générer une pression hydraulique ;
dans lequel le troisième dispositif à cylindre et piston (120, 122) comprend un cylindre hydraulique (120) dans lequel est reçu de manière coulissante un piston (122) relié à la pédale de frein (126), le cylindre hydraulique (120) et le côté du piston (122) opposé à la pédale de frein définissant la chambre hydraulique (124) qui est couplée fluidiquement au circuit de simulation (145) par un trajet de fluide (141), le circuit de simulation comprenant un accumulateur de pression hydraulique (144) qui est réalisé sous la forme d'un agencement à cylindre et piston, le piston reçu de manière coulissante dans le cylindre étant précontraint par un ressort ; et
dans lequel le premier dispositif à cylindre et piston (110, 112, 114) présente au moins deux chambres hydrauliques (111, 116, 118) définies par un cylindre (110) et ledit au moins un premier piston (112, 114), la première chambre (111) étant couplée fluidiquement côté entrée au deuxième dispositif à cylindre et piston (260, 262) et au moins une deuxième chambre (116, 118) pouvant être couplée fluidiquement à au moins un circuit de freinage (10, 20) du système de freinage (1000a) ;
**caractérisé en ce que**
le troisième dispositif à cylindre et piston (120, 122) peut être couplé fluidiquement au deuxième dispositif à cylindre et piston (260, 262) par la première chambre (111) du premier dispositif à cylindre et piston (110, 112, 114).

2. Système de freinage électrohydraulique (1000a) selon la revendication 1, dans lequel la pression hydraulique sur ledit au moins un frein de roue (401-404) est générée uniquement par le premier dispositif à cylindre et piston (110, 112, 114).

3. Système de freinage électrohydraulique (1000a) selon la revendication 1 ou 2, dans lequel, dans un fonctionnement à commande mécanique (push-through) du système de freinage (1000a), le troisième dispositif à cylindre et piston (120, 122) est couplé au premier dispositif à cylindre et piston (110, 112, 114) afin de permettre un actionnement du premier piston (112, 114) en fonction de la force du pied pour la génération de pression hydraulique.

4. Système de freinage électrohydraulique (1000a) selon l'une des revendications précédentes, dans lequel le deuxième dispositif à cylindre et piston (260, 262) est prévu pour fournir, dans un fonctionnement à commande électrique (brake-by-wire) du système de freinage (1000a), la pression hydraulique pour l'actionnement hydraulique du premier piston (112, 114) du premier dispositif à cylindre et piston (110, 112, 114).

5. Système de freinage électrohydraulique (1000a) selon la revendication 4, dans lequel la pression hydraulique est fournie en fonction d'une demande de freinage détectée ou d'un ordre d'un programme de régulation de la dynamique du véhicule.

6. Système de freinage électrohydraulique (1000a) selon l'une des revendications précédentes, dans lequel le premier dispositif à cylindre et piston (110, 112, 114) et le deuxième dispositif à cylindre et piston (260, 262) sont branchés en série fluidiquement par un trajet de fluide (268).

7. Système de freinage électrohydraulique (1000a) selon l'une des revendications précédentes, dans lequel une surface active dudit au moins un premier piston (112, 114) et une surface active du deuxième piston (262) ont entre elles un rapport prédéterminé.

8. Système de freinage électrohydraulique (1000a) selon la revendication 7, dans lequel la surface active dudit au moins un premier piston (112, 114) est supérieure à la surface active du deuxième piston (262).

9. Système de freinage électrohydraulique (1000a) selon la revendication 1, dans lequel ladite au moins une deuxième chambre (116, 118) comprend deux chambres hydrauliques (116, 118) qui sont disposées l'une après l'autre dans le cylindre (110) et sont couplées ou peuvent être couplées fluidiquement chacune à un circuit de freinage (10, 20) du système de freinage (1000a).

10. Système de freinage électrohydraulique (1000a) selon l'une des revendications précédentes, dans lequel le premier dispositif à cylindre et piston (260, 262) et le troisième dispositif à cylindre et piston (120, 122) sont disposés l'un derrière l'autre dans l'espace.

11. Système de freinage électrohydraulique (1000a) selon l'une des revendications précédentes, dans lequel le premier dispositif à cylindre et piston (110, 112, 114) et le deuxième dispositif à cylindre et piston (260, 262) sont disposés sensiblement parallèlement l'un à l'autre dans l'espace.

12. Système de freinage électrohydraulique (1000a) selon l'une des revendications précédentes, comprenant en outre un appareil de commande ou un système d'appareil de commande (200) pour la commande électrique de l'actionneur électromécanique en fonctionnement brake-by-wire.
